# EUROPEAN PATENT APPLICATION

(11) **EP 2 489 256 A2**
(43) Date of publication of application: **22.08.2012**
(21) Application number: 12155358.0
(22) Date of filing: 14.02.2012
(51) Int. Cl.: A01G 31/04

(54) **Plant cultivation system**

(30) Priority: 17.02.2011 KR 20110014232
(71) Applicant: Green Plus Co. Ltd., Eungbong-Myeon, Yesan-Gun Chuncheongnam-Do, 340-824 (KR); Park, Young Hwan, Pyeongtaek-si, Gyeonggi-do 459-824 (KR)
(72) Inventor: PARK, Young Hwan, 459-824 Gyeonggi-Do (KR)
(74) Representative: Sajda, Wolf E.

(57) **Abstract**

Disclosed is a plant cultivation system for environmentally growing a variety of plants in all-weather, regardless of the natural environment or a place and for significantly increasing the production per unit area. The plant cultivation system includes: a circulatory system (20) including a plurality of axes (24) installed in a corresponding portion of a frame (13) installed in a cultivation room (10); a plurality of chain gears (22) axis-installed on the plurality of axes (24) respectively; a left and a right chain (23) for chaining the plurality of chain gears (22) to be hung in turn; and a motor (21) connected and installed onto any axis of the plurality of axes (24); a plurality of cultivating pot members (30) including a can body (31) having an opening in an upper surface, and a hook plate (32), fixed to left and right ends of the upper surface of the can body, for axis coupling and installing by hanging onto left and right hook axes (26) horizontally fixed in an inner space of the left and right chains (23) which face each other at regular intervals; and for moving and circulating in the inner space of the cultivation room (10) by rotatably installing as hanging between the left and right chains (23) by the left and right hook axes (26) and the hook plate (32); a medicinal fluid supplier (40) for providing the medicinal fluid to the plurality of cultivating pot members (30); and an air blower (50), installed in the cultivation room (10), for providing the filtered external air to an interior or for circulating the inner air.

## Description

### BACKGROUND OF THE INVENTION

### 1. Field of the Invention

The present invention relates to a plant cultivation system, more particularly to a plant cultivation system for environmentally growing a variety of plants in all-weather, regardless of the natural environment or a place and for significantly increasing the production per unit area.

### 2. Description of the Related Art

In general, a glass greenhouse or a vinyl greenhouse can cultivate fruit-type vegetables such as cucumber, tomatoes, cherry tomatoes, peppers, and etc., leafy vegetables such as celery, lettuce, water parsley, cabbage, Chinese cabbage, and flowering plant such as roses, gerbera, chrysanthemums, carnations, etc. Accordingly, farmers can increase in revenue and consumers are able to ingest the various and fresh plants in the winter.

However, this glass greenhouse or vinyl greenhouse is constructed on the ground such as farmland or the lived in area, and the corresponding plants are grown by the manner of sowing the seeds of those plants on the ground or transplanting seedlings grown in the nursery, while there were problems that the production is limited by growing space or per unit area and damage due to repeated cultivation is created.

Thus, to increase the production in limited cultivation area, to reduce the workforce, and to reduce the damage caused by the repeated cultivation, farmers can cultivate in a manner of arranging the plants with multi-stages in cultivating space in prior art.

However, this cultivating manner has the problem of adversely affecting the plants cultivation in the bottom of the multi-stages, since the sun for lighting of the plants located on the bottom, is blocked by the plants in highest top, bed, or plant pots planted their roots in the highest top.

In addition, the other prior art have suggested that the interval between beds or plant pots in the highest top or lowest bottom are spaced out to solve these problems. But these prior art have still the problem of relatively reducing the production due to not construct multi-stage and thus falling the economic feasibility.

To overcome these problems, the worker can cultivate the plants with more multi-stages extended to vertical and horizontal directions. But the worker does not directly reach the higher places of the plants or the fruits in the harvest season, and the worker has to use a ladder. Therefore, these prior manner are also uncomfortable and thus undesirable and require a lot of time and manpower.

### SUMMARY OF THE INVENTION

The problem to be solved by the claimed invention consists in development of a plant cultivation system. An object of the present invention is to provide a plant cultivation system for environmentally growing, and quickly and smoothly harvesting a variety of plants.

An object of the present invention is to provide a plant cultivation system for maximizing the ability of space usage by cultivating the plants in all-weather.

A further other object of the present invention is to provide a plant cultivation system for simply and easily performing the cultivation management and the harvest work, and for reducing labor time and the waste of human resources and manpower.

A still other object of the present invention is to provide a plant cultivation system not requiring the time of injecting medicine into the plants, and for preventing from failure for circulatory in the plant cultivation system.

A yet other object of the present invention is to provide a plant cultivation system for achieving the simple structure and the low installation costs, and for simply and easily transplanting germinated plants to plant and cultivate in cultivating pots.

To achieve these objects and other advantages, and in accordance with the purpose of the invention, as embodied and broadly described herein, a plant cultivation system comprising: a circulatory system 20 including a plurality of axes 24 installed in a corresponding portion of a frame 13 installed in a cultivation room 10; a plurality of chain gears 22 axis-installed on the plurality of axes 24 respectively; a left and a right chain 23 for chaining the plurality of chain gears 22 to be hanged by turn; and a motor 21 connected and installed onto any axis of the plurality of axes 24; a plurality of cultivating pot members 30 including a can body 31 having an opening in an upper surface, and a hook plate 32, fixed to left and right ends of the upper surface of the can body, for axis coupling and installing by hanging onto left and right hook axes 26 horizontally fixed in an inner space of a left and a right chain 23 which is faced each other at regular intervals; and for moving and circulating in the inner space of the cultivation room 10 by rotatably installing, and hanging between a left and a right chain 23, the left and right hook axes 26 and the hook plate 32; a medicinal fluid supplier 40 for providing the medicinal fluid to the plurality of cultivating pot members 30; and an air blower 50, installed in the cultivation room 10, for providing the filtered external air to an interior or for circulating the inner air.

Here, the plant cultivation system further comprises a plurality of lamps 60 installed onto the frame 13 at regular intervals to be traversed toward left and right for the moving direction of the cultivating pot member 30, and a reflector 10a, installed in an inside of the cultivation room 10, for reflecting sunlight shining around the circulatory system 20 to the cultivating pot members 30

According to the present invention, the plant cultivation system provides an improved plant cultivating manner, that of moving in a cycle for a plurality of planting pots sowed the seeds of the plants or transplanted seedlings of the plants. Thus, the plant cultivation system allows to evenly receive sunlight for ensuring the constant growth characteristics, when the bed or plant pots are arranged with multi-stages to be extended in the upper or lower directions in the internal space of a cultivation room. Therefore, the plant cultivation system of the present invention can obtain advantages that the various plants are grown in a short period of time and the plants are harvested in large quantities.

In addition, according to the plant cultivation system of the present invention, farmers can cultivate the plants with all-weather, regardless of the natural environment or a place by supplying the light energy provided from the number of lamps installed in the lower part where the sunlight is not shining completely, and the production per unit area is grown in large quantity since the plants are grown more quickly and smoothly in the plant pots.

In particular, according to the plant cultivation system of the present invention, insect attacks do not break out, the productivity and the workability are maximized, a waste of time and manpower are solved naturally, since the farmers cultivate the plants with sterilized nutrient, sandy loam, culture soil, and manage and harvest the plants or their fruits in a constant place.

In addition, according to the plant cultivation system of the present invention, the farmers can cultivate a variety of plants by using one cultivation system because of easily controlling the installation interval of the cultivating pots. Thus, the farmer can grow the plants which stem is spread out, such as strawberries, with the same cultivating system.

In addition, the plant cultivation system of the present invention can inject medicinal fluid to the plants in a state that the cultivating pots orbit without stopping to inject the medicinal fluid in the cultivating room. Thus, it is not required to stop for injecting the medicinal fluid, and not have a breakdown caused by overloading in a motor, since the circulatory system does not repeat stop-and-go operation.

In addition, according to the plant cultivation system of the present invention, the frame structure is simple and the construction cost also is not expensive, because the chain gears are installed in corresponding place of each frame without using the long axis.

In addition, according to the plant cultivation system of the present invention, the plants are easily and simply moved in a short space of time, since the plant pots are loaded in the cultivating pots after moving nurseries where a plurality of plant pots are arranged, while the plant pots are not separated according to the kind of plants, which is germinated from seeds at a plurality of plant pots in nurseries vertically and horizontally arranged in multi-stages.

### BRIEF DESCRIPTION OF THE DRAWINGS

Various features, aspects and benefits of the embodiments of the invention will become apparent and more readily appreciated from the following description of the embodiments, taken in conjunction with the accompanying drawings, of which:
- FIG. 1: is a side view schematically illustrating a plant cultivation system in accordance with the first embodiment of the present invention.
- FIG. 2: is an enlarged plane view illustrating a main part of the plant cultivation system of FIG. 1.
- FIG. 3: is an enlarged side view illustrating a main part of the plant cultivation system of FIG. 1, in the condition that reflectors are omitted.
- FIG. 4: is an enlarged side view illustrating a specific part in FIG. 3.
- FIG. 5: is a front view illustrating a specific part in FIG. 4.
- FIG. 6: is an enlarged side view illustrating the moving state of a chain and cultivating pots in FIG. 4.
- FIG. 7: is an enlarged rear view illustrating a guide rail in FIG. 4.
- FIG. 8: is an enlarged perspective view illustrating a cultivating pot member in FIG. 1.
- FIG. 9: is an enlarged exploded perspective view illustrating a main part of the cultivating pot member in FIG. 8.
- FIG. 10: is an enlarged side sectional view illustrating an example of the cultivating pot member in FIG. 8.
- FIG. 11: is an enlarged side sectional view illustrating another example of the cultivating pot member in FIG. 8.
- FIG. 12: is a side view schematically illustrating a plant cultivation system in accordance with the second embodiment of the present invention.
- FIG. 13: is a front view illustrating a specific part in FIG. 12.
- FIG. 14: is a side view schematically illustrating a plant cultivation system in accordance with the third embodiment of the present invention.
- FIG. 15: is an enlarged rear view illustrating a plant cultivation system of FIG. 14.
- FIG. 16: is an enlarged plane view illustrating a main part of a plant cultivation system of FIG. 14.
- FIG. 17: is an enlarged rear view illustrating a main part of a plant cultivation system of FIG. 14.
- FIG. 18a: is an enlarged perspective view illustrating a cultivating pot member in FIG. 14.
- FIG. 18b: is an enlarged side view illustrating a cultivating pot member in FIG. 18a.
- FIG. 18c: is an exploded perspective view illustrating a main part of a cultivating pot member in FIG. 18a.
- FIG. 19a: is a perspective view illustrating another example of a cultivating pot member applied in FIG. 14.
- FIG. 19b: is an enlarged perspective view illustrating a main part of a cultivating pot member of FIG. 14.
- FIG. 20a: is an enlarged side view illustrating a main part of a medicinal fluid supplier in FIG. 14.
- FIG. 20b: is a side view illustrating a state that a cylinder is forwardly operated in FIG. 20a.
- FIG. 21a: is an enlarged side view illustrating a main part of a medicinal fluid supplier in FIG. 20a.
- FIG. 21b: is a side view illustrating the operation state of a medicinal fluid supplier in FIG. 21a.
- FIG. 22: is a perspective view illustrating another example of a cultivating pot member applied in FIG. 14.
- FIG. 23: is a side view schematically illustrating a plant cultivation system in accordance with the fourth embodiment of the present invention.
- FIG. 24: is a plane view illustrating a plant cultivation system of FIG. 23.
- FIG. 25: is a side view illustrating a main part of a plant cultivation system of FIG. 23.
- FIG. 26: is an enlarged plane view illustrating a main part of a plant cultivation system in FIG. 24.
- FIG. 27: is an enlarged rear view illustrating a main part of a plant cultivation system in FIG. 24.
- FIG. 28a: is an enlarged perspective view illustrating a cultivating pot member in FIG. 24.
- FIG. 28b: is an enlarged side view illustrating a cultivating pot member of FIG. 28a.
- FIG. 28c: is an enlarged and exploded perspective view illustrating a main part of a cultivating pot member in FIG. 28a.
- FIG. 29a: is an enlarged plane view illustrating a main part of a medicinal fluid supplier in FIG. 24.
- FIG. 29b: is a plane view illustrating a state that a cylinder is forwardly operated in FIG. 29a.
- FIG. 30a: is an enlarged side view illustrating an installation place of a medicinal fluid supplier in FIG. 29a.
- FIG. 30b: is a side view illustrating the operation state of a medicinal fluid supplier in FIG. 30a.
- FIG. 31: is an enlarged cross sectional view illustrating a state that medicinal fluid is supplied to a cultivating pot member in FIG. 30a.

### DETAILED DESCRIPTION OF EXEMPLARY EMBODIMENTS

Hereinafter, a detailed description of a plant cultivation system in accordance with an embodiment of the present invention will be presented in accordance with the accompanying drawings as follows.

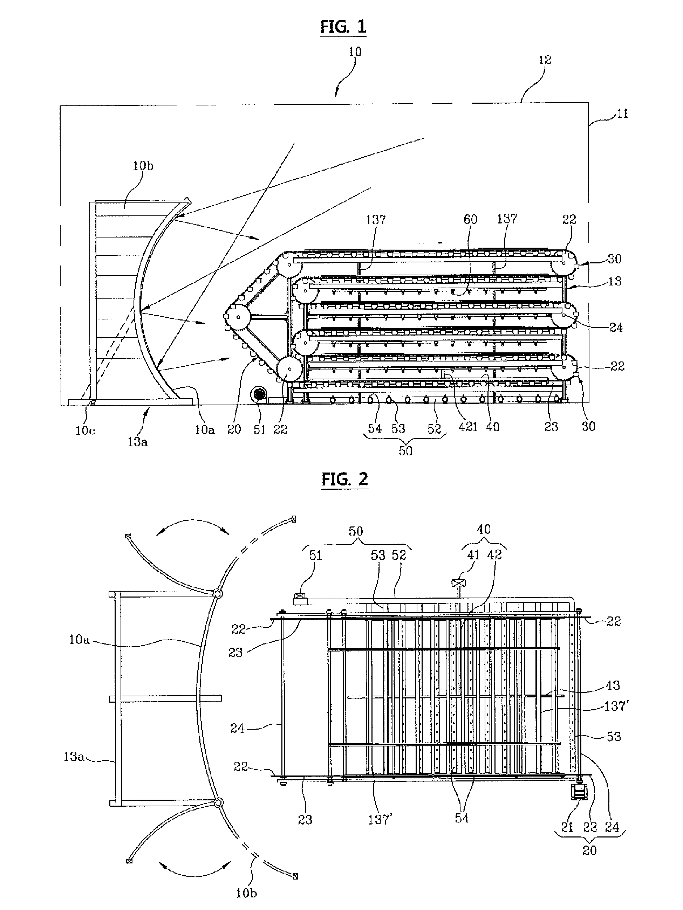

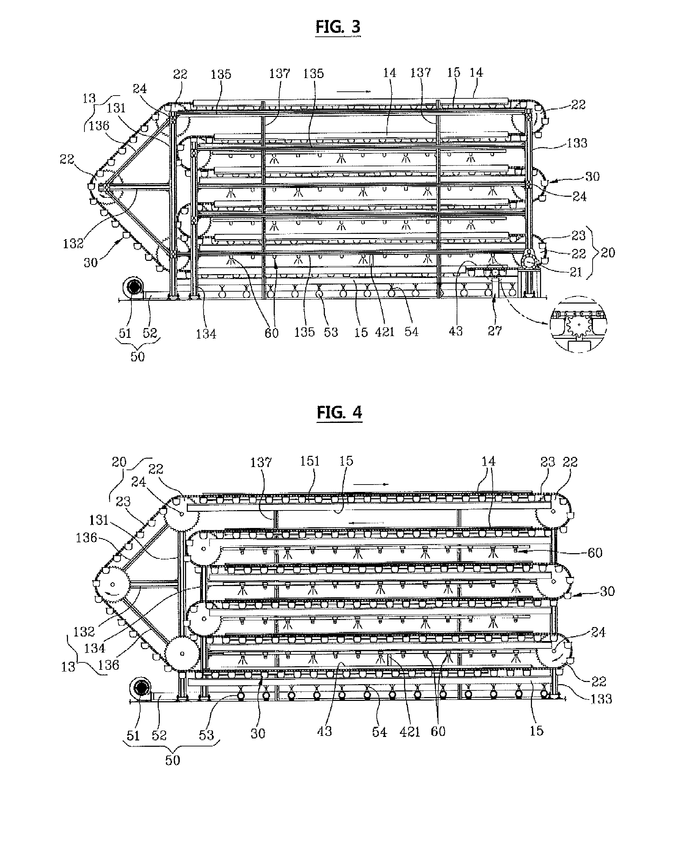

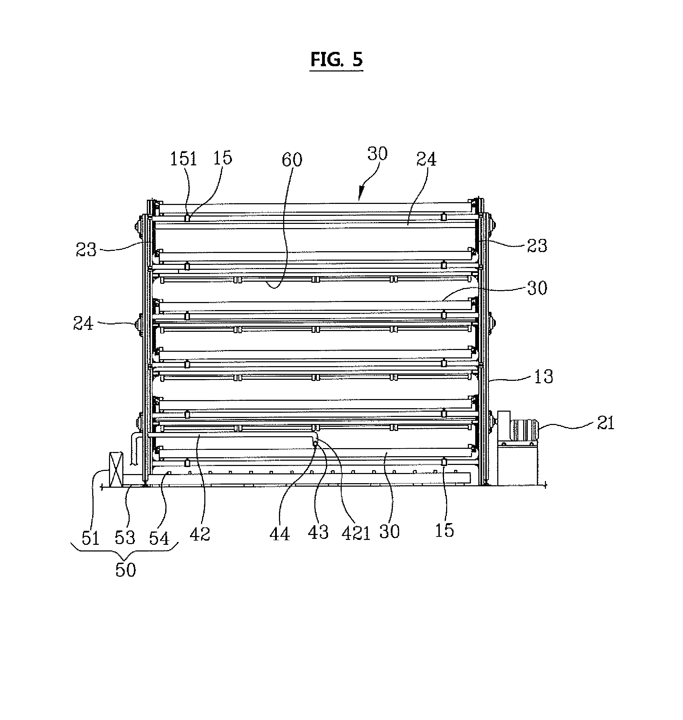

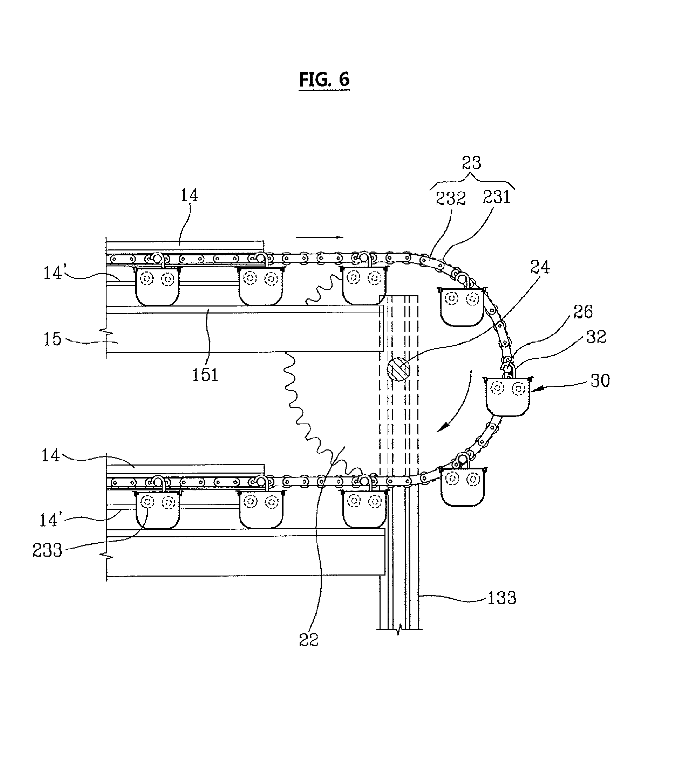

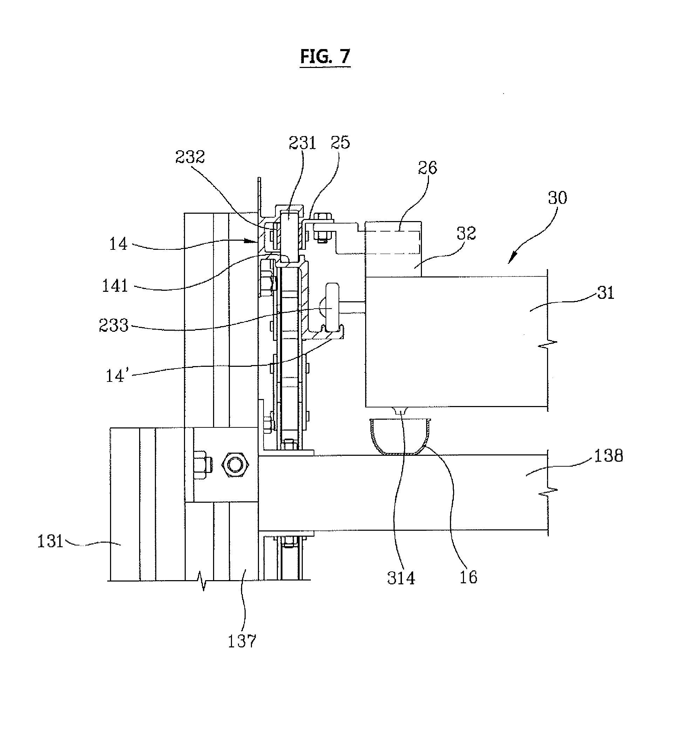

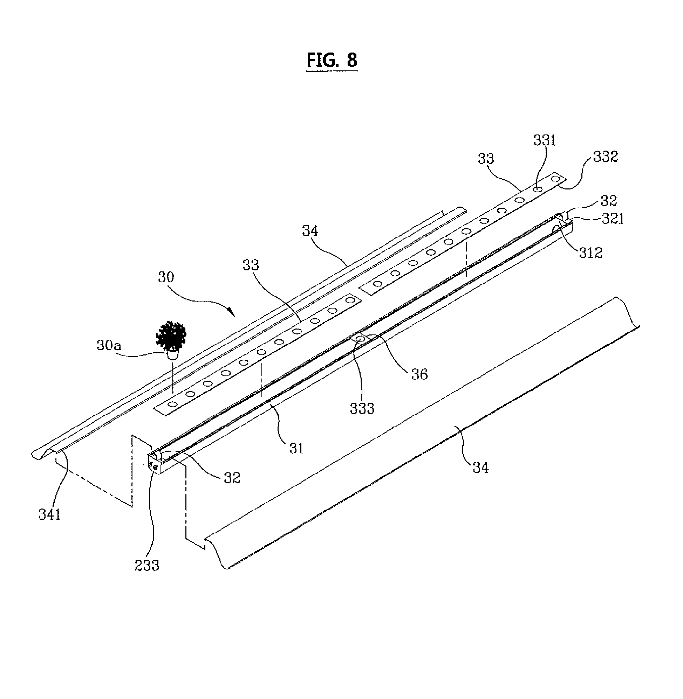

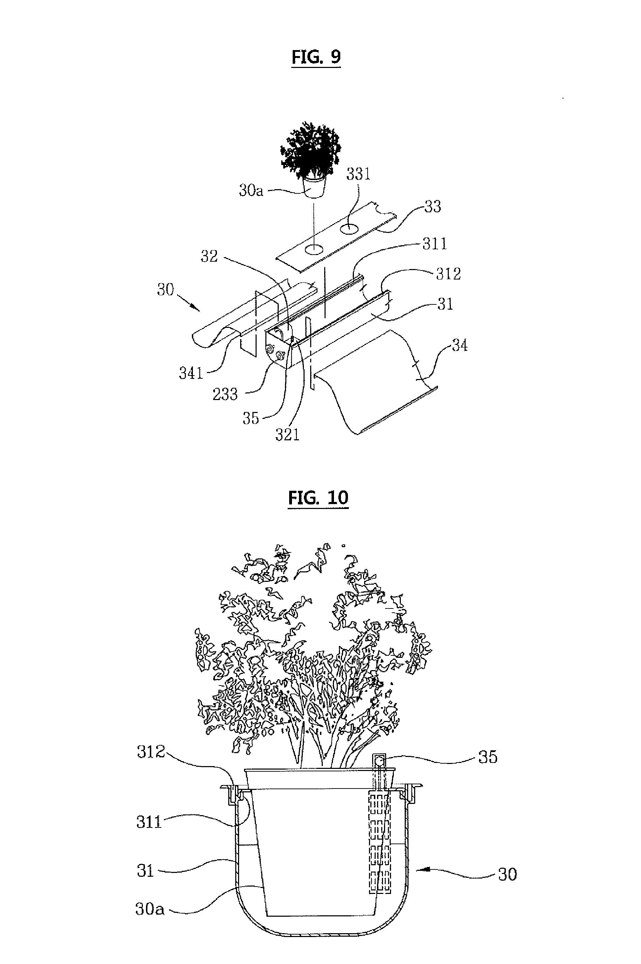

FIG. 1 is a side view schematically illustrating a plant cultivation system in accordance with the first embodiment of the present invention; FIG. 2 is an enlarged plane view illustrating a main part of the plant cultivation system of FIG. 1; FIG. 3 is an enlarged side view illustrating a main part of the plant cultivation system of FIG. 1, in the condition that reflectors are omitted; FIG. 4 is an enlarged side view illustrating a specific part in FIG. 3; FIG. 5 is a front view illustrating a specific part in FIG. 4; FIG. 6 is an enlarged side view illustrating the moving state of a chain and cultivating pots in FIG. 4; FIG. 7 is an enlarged rear view illustrating a guide rail in FIG. 4; FIG. 8 is an enlarged perspective view illustrating a cultivating pot member in FIG. 1; FIG. 9 is an enlarged exploded perspective view illustrating a main part of the cultivating pot member in FIG. 8; FIG. 10 is an enlarged side sectional view illustrating an example of the cultivating pot member in FIG. 8.

The plant cultivation system of the first embodiment of the present invention includes: a cultivation room 10; a circulatory system 20 which is installed on the inside of the cultivation room; a plurality of cultivating pot members 30 arranged with a constant spacing in the circulatory system 20 to rotatably move in the internal space of the cultivation room 10; a medicinal fluid supplier 40 for providing medicinal fluid to the plurality of cultivating pot members 30; and an air blower 50 for providing the filtered external air to an interior of the cultivation room 10 or for circulating the inner air of the cultivation room 10 or exhausting the inner air to an outside.

The cultivation room 10 is constructed with four walls 11 and a ceiling 12 by using vinyl, transparent plastic boards, acrylic resin, or glass etc. such as a typical glass greenhouse or vinyl greenhouse, and a door is generally installed on one wall among the four walls for cultivation and harvest management.

In addition, a reflector 10a is installed inside of the cultivation room 10 since the sunlight shining around the circulatory system 20 is provided to the cultivating pot member 30.

To this end, a reflector 10a having a reflective surface formed with a curved surface is installed to be supported by a supporting frame 13a, where the sunlight is received the most around a frame 13 according to the installing direction of the cultivation room 10. Then, the light energy is increasingly provided by reflecting sun light collected around the reflector 10a to the cultivating pot member 30.

A secondary reflector 10b is coupled by using a hinge in the left and right place of the reflector 10a, and a wheel 10c is installed on the bottom of the reflector 10 a. A user can fully unfold or expand at the appropriate angle depending on their needs, the sun light can be more effectively reflected to the cultivating pot member 30.

The circulatory system 20 includes a motor 21 which may be provided with a suitable transmission or reduction gear, a plurality of chain gears 22, and a left and a right chain 23, while the plurality of chain gears 22, and a left and a right chain 23 are equipped to be able to take full advantage of the internal space in view of the height or the width of the cultivation room 10 as well as the kind of plants.

For example, in the case of a cultivation room 10 with an interior space such as FIG. 1 is installed, there are installed in the cultivation room 10 with the frame 13 including a left and right front vertical beam 131; a left and right horizontal beam 132 in which each rear part is fixed to the front vertical beam 131 to be forwardly extended to an outside; a left and right rear vertical beam 133; a left and right vertical beam 134 directly located in a rear place of the front vertical beam 131; a plurality of left and right horizontal support beams 135 for horizontally connecting and fixing to both an upper and a lower portions and an intermediate portion of the front vertical beam 131, the rear vertical beam 133 and the left and right vertical beam 134, and a plurality of left and right incline support beams 136 for slopingly connecting and fixing to the left and right horizontal beam 132 and the plurality of left and right horizontal support beams 135.

In the case that the interval between the front vertical beam 131, the rear vertical beam 133 and the left and right vertical beam 134 increases, at least one or more left and right vertical support beam 137 are fixed and installed on each inner side of the left and right horizontal support beams 135 to be traversed up and down directions to enforce the frame 13, as considering the size of the interval.

On the other hand, the plurality of chain gears 22 are axis-fixed at both ends of each axis 24 installed to be positioned left and right in corresponding portions that of each upper end and lower end of the front vertical beam 131, each front end of the left and right horizontal beam 132, and each upper end, middle end, and lower end of the left and right vertical beam 134.

In addition, the left and right chain 23 is installed to be horizontally chained and moved through a chain gear 22 located in each lower end of the left and right of front vertical beam 131, a chain gear 22 located in the upper end of the front vertical beam 131 through a chain gear 22 located in the front end of the left and right horizontal beam 132, a chain gear 22 located in the upper end of the rear vertical beam 133, a chain gear 22 located in the upper end of the left and right vertical beam 134, a chain gear 22 located in the middle end of the rear vertical beam 133, a chain gear 22 located in the middle of the left and right vertical beam 134, and a chain gear 22 located in the lower end of the rear vertical beam 133, respectively.

It is installed like above manner, the practical ability of the inner space will be maximized by installing a lot of cultivating pot members 30 as compared to the inner space of the cultivation room 10 as described hereinafter, since the chain 23 goes through from the upper end of the front vertical beam 131 to both the upper end of the rear vertical beam 133 and the left and right horizontal beam 132, then horizontally moves along to " 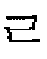 " shape between the rear vertical beam 133.

In addition, to move through the chain gear 22 located at the front end of the left and right horizontal beams 132, is to greatly increase the workability by letting the user manage or harvest the plants growing in the cultivating pot member 30, which goes through the chain gear 22, in a standing state in front of the left and right horizontal beam 132 as described hereinafter.

In addition, in each corresponding place where the chain 23 passes through in the inner sides of the front vertical beam 131, the left and right of rear vertical beam 133, and the left and right vertical beam 134, guide rails 14 are fixed and installed horizontally, thereby supporting the chain 23. Thus, there is no chain trouble such that the chain 23 is drooped due to their weight or jumped from their moving path.

On the other hand, the diameter of each chain roller 231 of the chain is larger than the upper and the bottom width of the inside and outside plates 232, then the inside and outside plates 232 are rotating and moving by touching the outer surface of the chain roller 231 to the bottom of the guide rails 14, without touching the guide rails 14, as shown in FIG. 7.

In this manner, the circulation of the chain is smoothly performed because frictional resistance does not occur, and the abrasion, the occurrence of noise or reduced life are prevented, since the chain 23 rotates and moves as touching the outer surface of the chain roller 231 to the bottom of the guide rails 14 in a course that the chain 23 goes through with the supporting state by the guide rails 14.

In addition, a rail groove 141, accepted of the outer surface of the chain rollers 231, is formed with a predetermined depth. When the chain roller 231 is rotated and moved as supporting by the rail groove 141, the chain 23 can be moved in a stable state without leaving the guide rail, even if the weight of the cultivating pot member 30 is loaded in a hook axis 26.

In addition, a roller rail 14' is integrally and downwardly formed to be extended in the inner end of the lower surface of the guide rail 14, and a roller 233 rotated and moved with the state as the roller rail 14' is supported on the left and right surface of the cultivating pot member 30.

Likewise, the roller 233 and the chain rollers 231 are smoothly rotated and moved, because the weight of the cultivating pot member 30 is distributed by the roller 233 and the hook axis 26. Thus, the cultivating pot member 30 and the chain 23 are circulated with a more stable state.

In addition, a front and rear of horizontal support beam 137' is fixed and installed to be traversed left and right in each corresponding portion of inner sides of the left and right vertical support beams 137 which is corresponding to the place of passing through the lower surface of the cultivating pot member 30, and a holding rail 15 is horizontally installed to be traversed back and forth in the upper left and right of horizontal support beam, and thereby holding and supporting the lower surface of the cultivating pot member 30. Thus, the horizontal balance is easily maintained and the load is dispersed over the holding rail 15 without concentrating on the left and right chains 23 and the rollers 233.

In addition, the holding rail 15 can be more smoothly moved in result of decreasing the friction force to the maximum, since a holding plate 151, which is a relatively thinly formed and molded by resin, is vertically combined on the upper end and is connected with the lower surface of the cultivating pot member 30. Also, the holding rail 15 can be simply replaced with a new one when it is worn out due to a long-term use.

On the other hand, an output axis of the motor 21 is connected with the axis installed to be traversed left and right in the lower side of the left and right of rear vertical beams 133 from each axes 24 in this embodiment, but it is not necessarily limited to the present embodiment, while it is allowable that the output axis of the motor 21 is connected with any axis from each axes 24.

In addition, a tension member 27 is installed at the appropriate location, preferably passing through the chain gear 22 installed the axis 24 connected with an output axis of the motor 21, in the moving path where the chain 23 is circulated, so that the tension member 27 can hold and support the chain 23 to prevent from drooping.

The cultivating pot member 30 includes a can body 31 having an opening in the upper surface, a "∩" type hook plate 32 for fixing both the upper ends of the can body 31 respectively, and a cover plate 33 combined to the opening to cover the upper surface and formed with a coupling hole 331 for a plant pot 30a.

The can body 31 is vertically and lengthily formed, the hook plate 32 is integrally formed on the upper surface of each fixing plate 321 which is adhered to cover both the opened upper ends of the can body, then the cultivating pot member 30 can be put on the left and right chains 23 as hanging from the chains with constant interval as described hereinafter.

A cover plate 33 is formed to be proportional to the length between the fixing plate 321, which is adhered to cover both the opened upper ends of the can body, and the coupling hole 331 is formed with the appropriate numbers at regular intervals considering the diameter of the plant pot 30a.

Each plant pot 30a is combined into these coupling holes 331, the rest part, except the upper part put in the coupling hole 331, is immersed in medicinal fluid received in the can body 31, thereby supplying nutrient to the plants.

In addition, the cover plate 33 can be simply and easily combined, or separated from the upper surface of the can body, since a combing part 311 is recessed and formed in length direction on the front or rear of the upper end of the can body 31 and a combing plate 332 for combining to the combing part 311 is downwardly extended in the front and rear ends of the cover plate 33.

On the other hand, a hold plate 34 can be attached or detached to the can body 31 to hold or support plants of which stem can be spread, such as strawberry.

To this end, a binding part 312 is recessed and formed in the length direction on the front or rear of the upper end of the can body 31, and a binding plate 341 for combining or separating the binding part 312 is downwardly extended in the length direction at one end of the hold plate 34 which is corresponding to the binding part 312.

This holding plate 34 includes an end where a binding plate 341 is horizontally formed and the other end extended and formed to be obliquely downward as the angle smoothly goes down toward the other end to naturally hold to spread stem.

In addition, a gauge 35 is vertically penetrated and installed on an installation hole formed in any fixing plate among the fixing plates 321, so that the user can always check the medicinal fluid level accommodated in the can body 31. As the result, the medicinal fluid supplier 40 can supply the medicinal fluid when the medicinal fluid is insufficient, while stopping the supply immediately when the medicinal fluid reaches an appropriate level.

In addition, since a grouting 333 is formed in the middle of the cover plate 33, the medicinal fluid supplied by the medicinal fluid supplier 40 can be injected to the can body through the grouting 333 in the state that the cover plate 31 is coupled to the upper surface of the can body 31.

In addition, a separation plate 36 formed with the grouting 333 is fixed in the middle of the opened upper surface if the length of the can body 31 is longer, and the cover boards 33 formed with a separated length are combined in the opened upper surface separated in left and right by the separation plate 36, respectively.

These structures are intended to prevent from deforming the cover plate 33 by the load, while the number of coupling holes 331 will be increased to combine with a plurality of plant pots 30a in the case that the cover plate 33 is formed with same length as having the long length of the can body 31.

To install the cultivating pot member 30 on the circulatory system 20, each vertical portion of a "¬" shaped bracket 25 with a constant interval in the inner space of the left and right chains 23 which is faced each other, and hook axes 26 are horizontally fixed and installed in each horizontal portion.

Thus, when the cultivating pot member 30 is installed in the circulatory system 20, the upper end of the hook plates 32 are axis-coupled to the hook axis 26 horizontally adhered to the inner surfaces of the left and right chains 23, respectively, thereby easily installing the cultivating pot member 30 between the chains with the constant interval as hanging state onto the chains. At this stage, the motor 21 is driven to rotate the chain, the cultivating pot members 30 are moved and circulated along the " 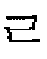 " shaped path in the inner space of the cultivation room 10.

As described above, the cultivating pot member 30 can be moved with hanging onto the chains to maintain the weight balance by dead load, because the upper end during the process of moving circulation, formed in the curved surface of the hook plate 32, is axis-combined and installed as hanging onto the hook axis 26. Thus, the cultivating pot member 30 can maintain the balance in the course of passing through each chain gear 22.

This circulated operation for the cultivating pot member 30 is to equally supply sun light onto the plants potted in each plant pot 30a, and the circulated speed is controlled by the control operation of the motor 21.

Meanwhile, in the embodiment of the present invention, the upper end of the cultivating pot member 30 are hung onto the hook axis 26 by using the "∩" type hook plate 32, it is not necessarily limited to this, while a hook plate, of which an end is formed in a tube type, can be also installed.

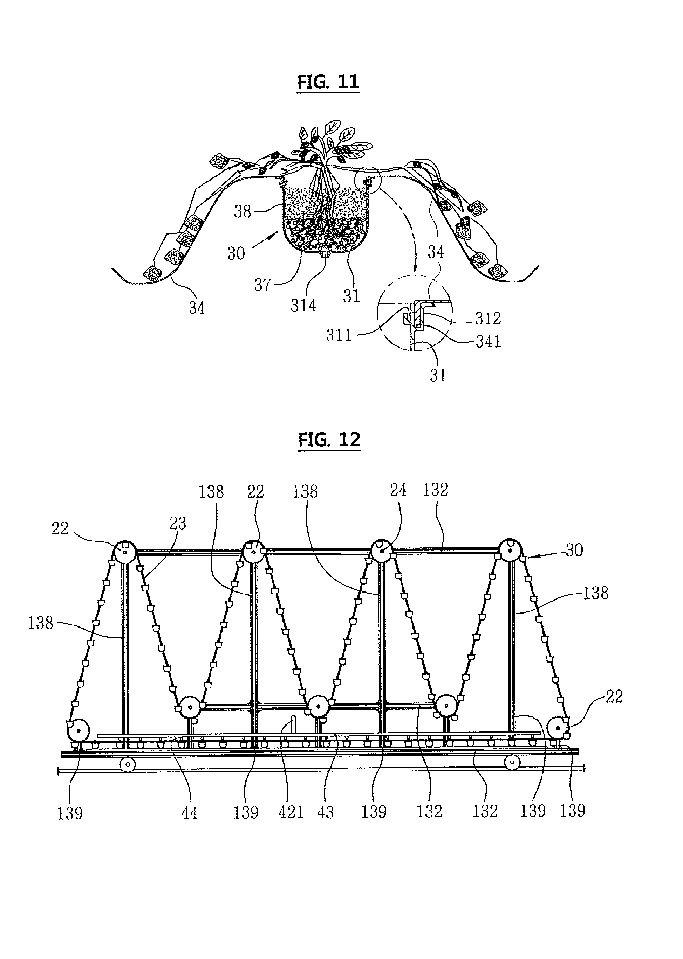

In addition, in the embodiment of the present invention, it is described that the cover plate 33 is formed onto the opened upper surface of the can body 31 and the gauge 35 is installed onto the upper end of fixing plates 321, respectively. Here, it is desired that the cultivating pot member 30 is to use the plants cultivating with the medicinal fluid. But, when the user wants to cultivate the plants growing in soil such as strawberries, the user does not install the cover plate 33 and the gauge 35, but puts the sandy loam 37 into the lower part of the can body 31, and puts the culture soil 38 with an appropriate thickness on the upper surface of sandy loam 37, and then plants strawberry seedlings at required intervals as shown in FIG. 11.

Here, the sandy loam 37 and the culture soil 38, etc. are all sterilized to prevent the occurrence of insects, and the sandy loam 37 militates to supply the medicinal fluid into the can body 31 as soon as possible.

A drain aperture 314 is formed on the lower end of the can body 31, and waterspout 16 is installed to be traversed toward back and forth in each corresponding location of the inner side of the left and right vertical support beams 137 which is corresponding to the drain aperture 314.

When the medicinal fluid is supplied into the cultivating pot member 30 using the sandy loam 37 and the culture soil 38, and it is preferable that the medicinal fluid supplier 40 is activated and supply the medicinal fluid from an upper surface of the cultivating pot member 30 where the binding plate 341 is not formed, so that the medicinal fluid can wet from the upper part of the sandy loam 37 to the lower part of the culture soil 38 in vertical direction.

If the lower portion of the cultivating pot member 30 is wetted with the medicinal fluid, some of the medicinal fluid will be drained through the drain aperture 314 and flowed down the waterspout 16, thereby confirming that the medicinal fluid is sufficiently supplied without the gauge 35. Next, the user stops the cultivating pot member 30 to discontinue the supply, then the drained medicinal fluid can be sent to a collecting tank (not shown) which is separately installed and connected with the waterspout 16 and the collected medicinal fluid can also be reused.

The medicinal fluid supply 40 includes: a pump 41 for pumping the medicinal fluid stored in a medicinal fluid tank (not shown); a supply pipe 42 having an end connected with the pump 41 and the other end 421 for draining from the middle portion of an end of the frame 13 to the lower and inner portion; a distribution pipe 43 horizontally installed to be traversed toward back and forth in the middle and upper part of the plurality of cultivating pot members 30 connected to the middle part with the other end 421 and passed through the lowest part of the frame 13; and an inlet 44 additionally installed on the lower part of the distribution pipe 43 with an interval corresponding to the grouting 333.

As described above, to install the distribution pipes 43 to be traversed toward back and forth in the middle and upper part of the plurality of cultivating pot members 30 passed through the lowest part of the frame 13, it is intended to minimize the sun light blocking phenomenon since the sun light will be partially shut out when the distribution pipes 43 are installed on the upper part.

If the pump 41 of the medicinal fluid supplier 40 operates and pumps the medicinal fluid stored in the medicinal fluid tank, the medicinal fluid is supplied to the inner part of the can body 31 through the supply pipe 42, the inlet 44 of the distribution pipe 43 connected with the other end 421, and the grouting 333 which is located on the downside.

The procedure of supplying the medicinal fluid to each cultivating pot member 30 will be described as below. First, the user interrupts the operation of the circulatory system 20 to stop the movement of each cultivating pot member 30. Second, the medicinal fluid supplier 40 simultaneously supplies the medicinal fluid through each inlet 44 to the cultivating pot members 30 located on the downside of the distribution pipe 43. Third, if the supply operation is completed, the circulatory system 20 can be operated to move the cultivating pot member 30 where the medicinal fluid is supplied, so that the cultivating pot member 30 can be departed from the lower part of the distribution pipe 43. Fourth, if the medicinal fluid should be supplied, the user moves and stops the corresponding cultivating pot member, as an object for injecting the medicinal fluid, onto each inlet 44 and then the user can repeated the procedure as many times as necessary as described above.

The water level of the medicinal fluid supplied by the medicinal fluid supplier 40 can be checked by the gauge 35 immediately, thus the user can stop the medicinal fluid supplier 40 when the appropriate amount of the medicinal fluid has been supplied.

The air blower 50 includes: an air blast fan 51; a blast pipe 52 formed to be traversed toward back and forth on the lower end of the frame 13 by connecting a rear end with the air blast fan 51; a plurality of branched blast pipes 53 formed to be traversed toward left and right on the lower surface of each frame 13 by connecting the rear end to the air blast fan 51 at regular intervals; and an exhaust 54 formed at regular intervals in each upper surface of the branched blast pipes 53.

The air blower 50 drives the air blast fan 51 to selectively inhale the outside air (CO₂ or O₂ included) or internal air.

Since the inhaled air generated by operating the air blast fan 51 is supplied to the each branched blast pipe 53 through the blast pipe 52 and discharged from the upward to the bottom of the frame 13 through each exhaust 54, the air blast fan 51 can supply purified external air or circulate internal air to each cultivating pot member 30. Thus, it is smoothly performed to adjust the internal temperature, supply the fresh air, and adequately ventilate with clean wind, thereby constructing a pleasant environment. Also, the plants can be grown and cultivated in the pleasant environment such that the growth and development is expedited as well as the rotting of the plants and fruits are prevented simultaneously.

Meanwhile, in the embodiment of the present invention, it is desirable to install a lamp 60 to provide enough sun light energy during all-weather onto the vulnerable area which is not in a sunny location, that is, in the lower part except for the cultivating pot member 30 which is passing through the upper end, in case that the left and right chains 23 are passed through " 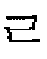 " type path among the front vertical beam 131, the left and right of rear vertical beam 133, and the left and right vertical beam 134.

To this end, a plurality of lamps 60 are installed onto the frame 13 at regular intervals to be traversed toward left and right for the moving direction of the cultivating pot member 30 in the corresponding area which is not in a sunny location, so that the user can always have light on, if necessary.

Accordingly, the plants can be cultivated and harvested in a short period in all weather without not only a significant impact on the natural environment but also regardless of place for cultivation, since the plants potted in plant pots 30a can evenly receive the sun light energy regardless of the location where the cultivating pot member 30 is moved.

In an embodiment of the present invention, the forth and back intervals where the cultivating pot member 30 is circulated, or the left and right intervals between the plurality of the cultivating pot members 30 can be determined within the range beyond the growth by considering the plant's characteristics.

In other words, if the user wants to cultivate plants, of which stems grow and extend to the horizontal directions, such as strawberries, the left and right intervals between the plurality of the cultivating pot member 30 should be broaden than the forth and back intervals, while if the user wants to cultivate plants, of which stems grow and extend upward, such as, lettuce or Chinese cabbage, the forth and back intervals should be broaden than the left and right intervals.

The left and right intervals can be adjusted by selecting and hooking the number of the cultivating pot members 30 onto the hook axis 26 fixed to the left and right chain 23 at regular intervals, while the forth and back intervals can be also adjusted by controlling the size of the diameter of the chain gear 22 for pinning the left and right chain 23.

In addition, the frame 13 can be stably moved, since the wheels are installed in the bottom of the frame 13 and the guide rail is also installed onto the ground.

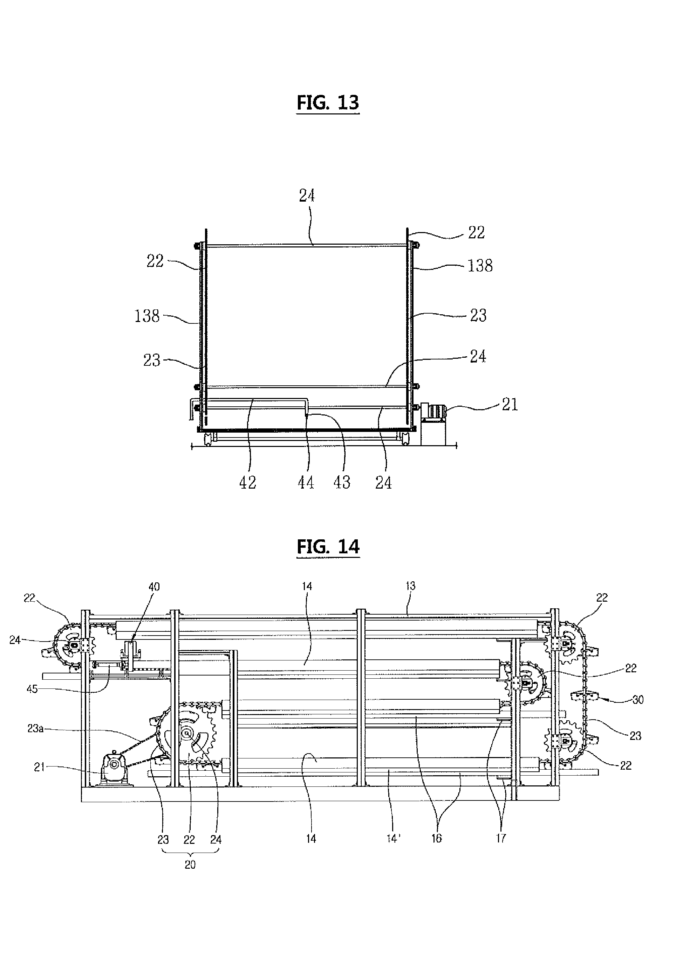

FIG. 12 is a side view schematically illustrating a plant cultivation system in accordance with the second embodiment of the present invention, FIG. 13 is a front view illustrating a specific part in FIG. 12.

The plant cultivation system of the second embodiment of the present invention is characterized in that, the cultivating pot member 30 can be both ascended or descended toward forth and back, and horizontally circulated. To achieve this, the frame 13 is installed so that a plurality of short vertical beams 139 and the left and right vertical beams 138, which are longer than the short vertical beams 139, are installed and arranged in turn onto the left and right horizontal beams 132.

In addition, the plurality of left and right chain gears 22 are axis-fixed onto each left and right ends of the plurality of axes 24 installed to be traversed toward left and right for the upper end of the left and right vertical beams 138 and the upper and lower ends of the left and right horizontal beams 132 located in the upper end and lower end of the short vertical beams 139, while the left and right chains 23 are chained on the chain gear in turn, respectively.

As the left and right chains 23 are chained as described above, the left and right chains 23 can be horizontally moved in the space of the chain gears 23 axis-installed in the forth and back of the left and right horizontal beams 132, while the left and right chains 23 can be ascended and descended repeatedly as passing through the upper ends of both the left and right vertical beams 138 and the short vertical beams 139 in turn.

Accordingly, if the plurality of cultivating pot members 30 are hooked by hanging the hook plate 32 onto the hook axis 26 fixed to the left and right chains 23 at regular intervals, the cultivating pot members 30 are slantly ascended and descended repeatedly and then horizontally moved and circulated repeatedly in the internal space of the cultivation room 10.

According to the second embodiment of the present invention, there are advantages in that all parts of the cultivating pot members 30 can evenly receive sun light, as compared with the first embodiment of circulating along the " 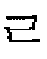 " path, since the intervals between the neighbored cultivating pot members 30 is wider as slantly ascending and descending repeatedly. Also, the number of the lamps 60 can be significantly reduced as compared with the first embodiment.

In addition, the distribution pipe 43 connected to the other end 421 of the supply pipe 42 for supplying the medicinal fluid may be horizontally installed to be traversed toward forth and back in the middle upper portion of the plurality of can bodies 31 which are passed through the lowest part of the frame 13.

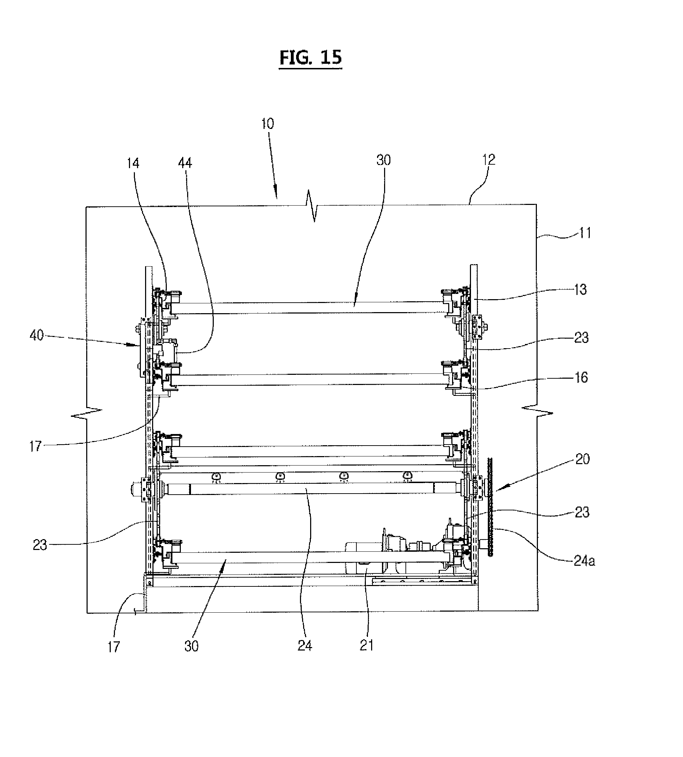

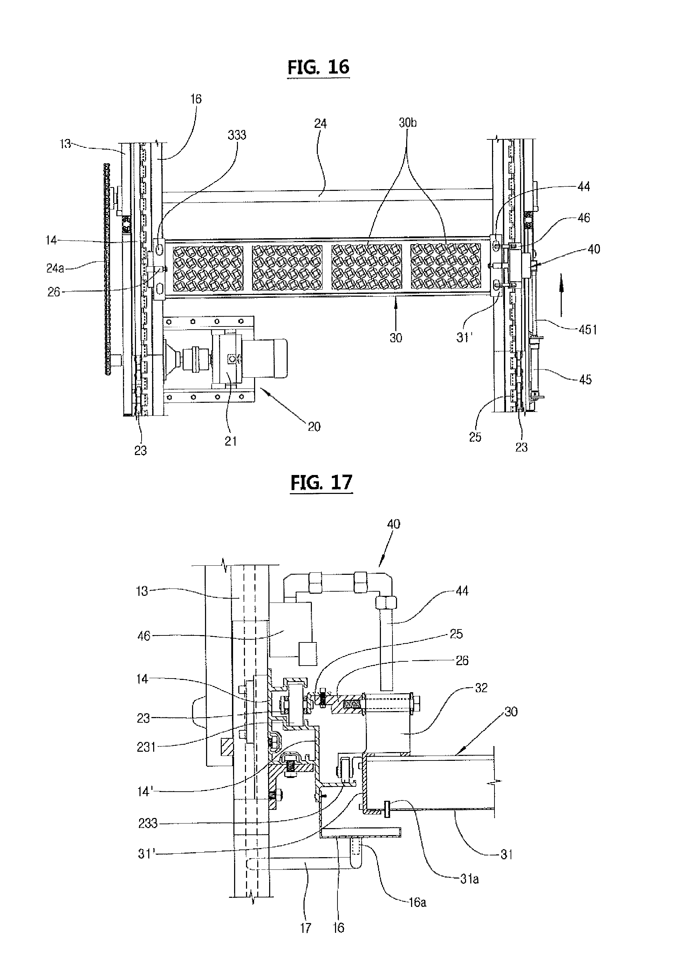

FIG. 14 is a side view schematically illustrating a plant cultivation system in accordance with the third embodiment of the present invention; FIG. 15 is an enlarged rear view illustrating a plant cultivation system of FIG. 14; FIG. 16 is an enlarged plane view illustrating a main part of a plant cultivation system of FIG. 14; FIG. 17 is an enlarged rear view illustrating a main part of a plant cultivation system of FIG. 14.

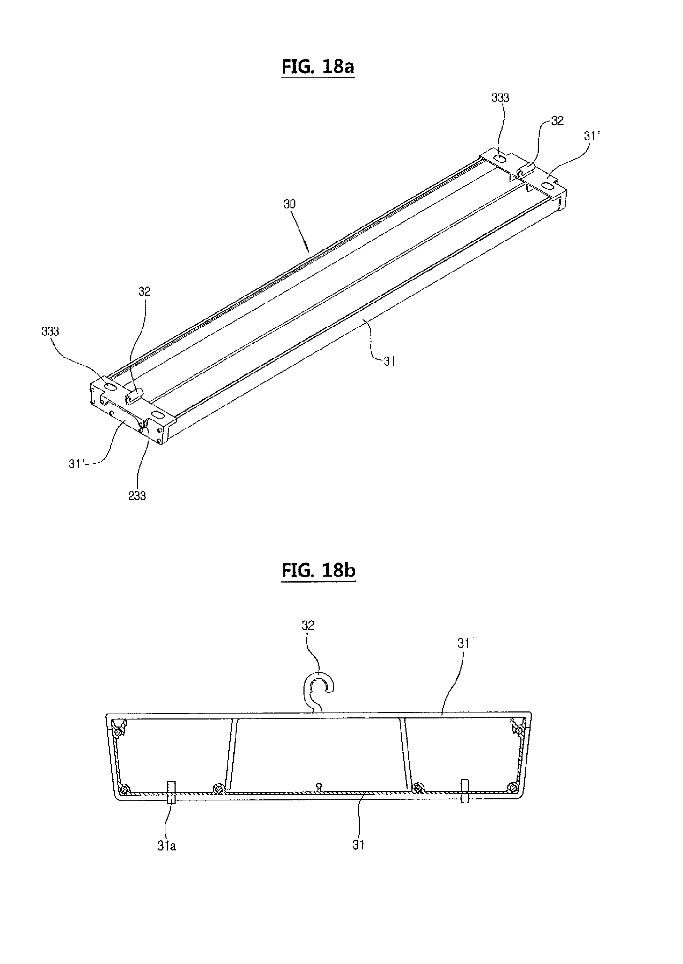

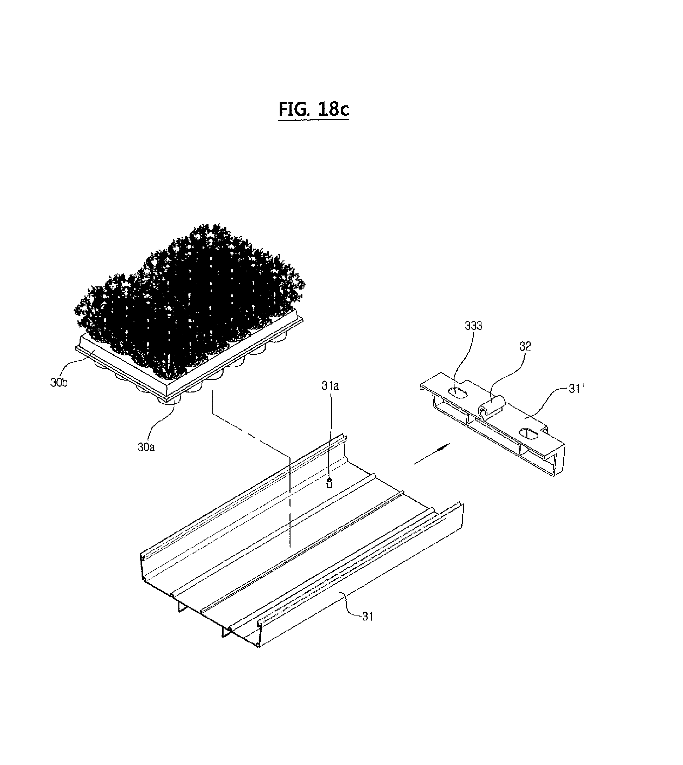

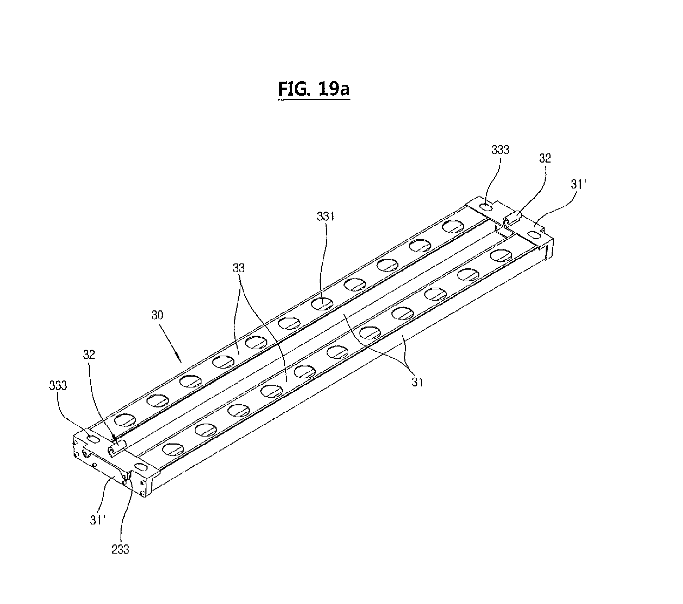

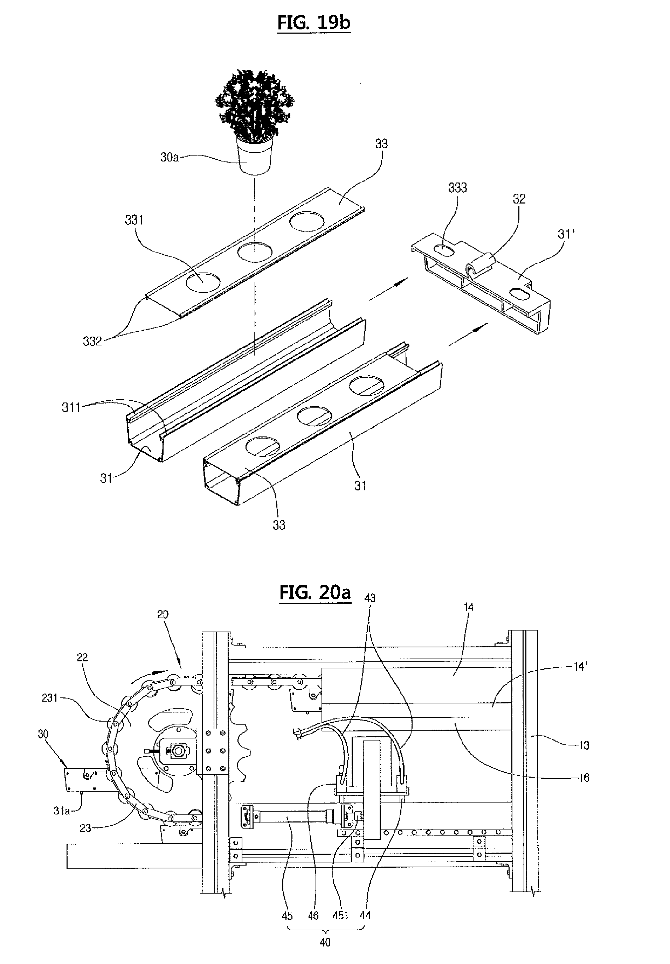

FIG. 18a is an enlarged perspective view illustrating a cultivating pot member in FIG. 14; FIG. 18b is an enlarged side view illustrating a cultivating pot member in FIG. 18a; FIG. 18c is an exploded perspective view illustrating a main part of a cultivating pot member in FIG. 18a; FIG. 19a is a perspective view illustrating another example of a cultivating pot member applied in FIG. 14; FIG. 19b is an enlarged perspective view illustrating a main part of a cultivating pot member of FIG. 14.

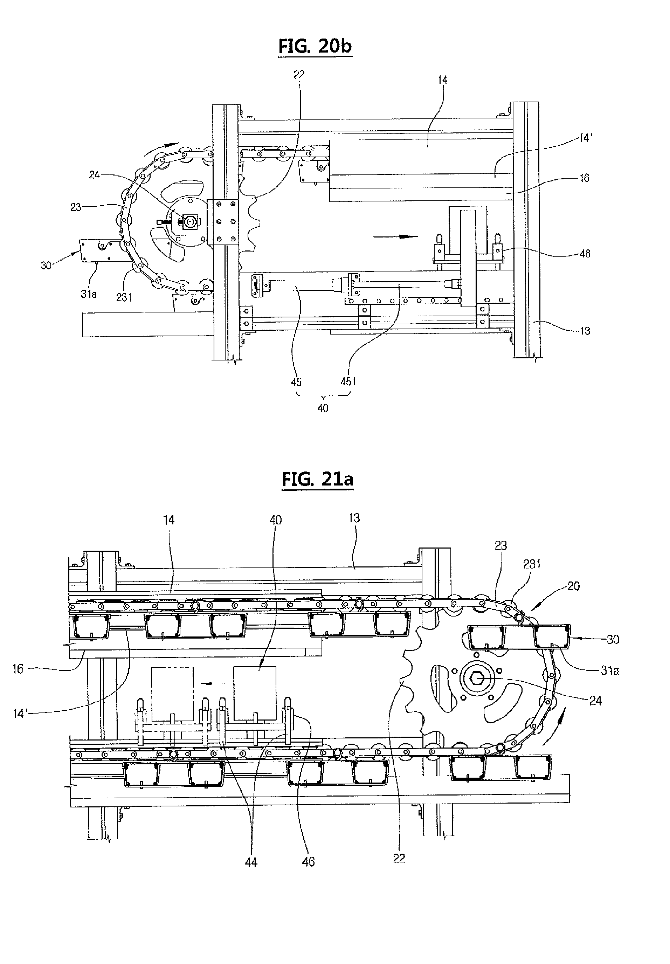

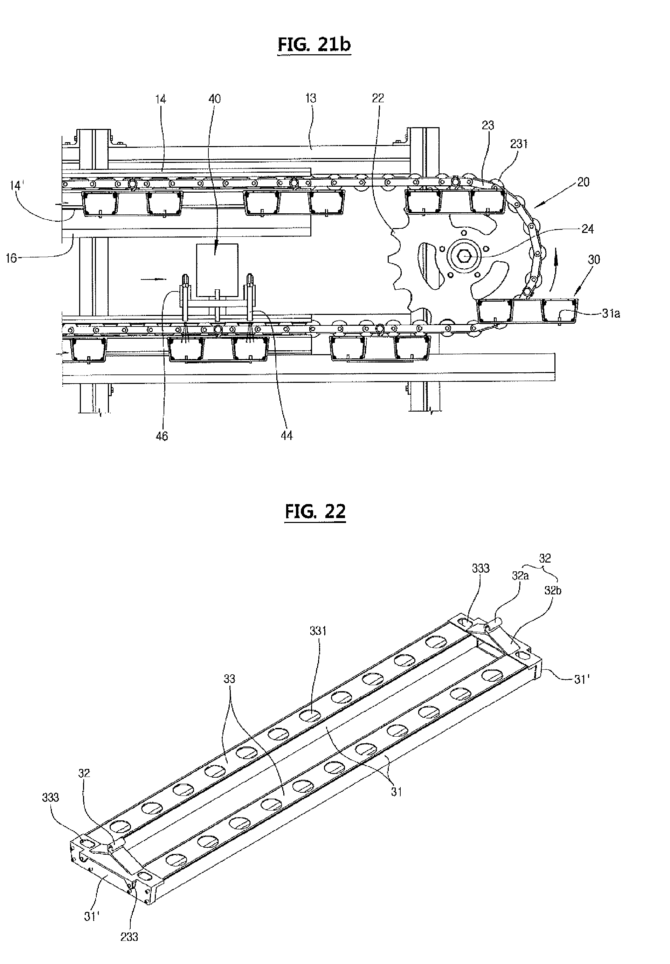

FIG. 20a is an enlarged side view illustrating a main part of a medicinal fluid supplier in FIG. 14; FIG. 20b is a side view illustrating a state that a cylinder is forwardly operated in FIG. 20a; FIG. 21 a is an enlarged side view illustrating a main part of a medicinal fluid supplier in FIG. 20a; and FIG. 21b is a side view illustrating the operation state of a medicinal fluid supplier in FIG. 21a.

The plant cultivation system of the third embodiment of the present invention includes: a cultivation room 10; a circulatory system 20 which is installed on the inside of the cultivation room; a plurality of cultivating pot members 30 arranged with a constant interval in the circulatory system 20 to rotatably move in the internal space of the cultivation room 10; and a medicinal fluid supplier 40 for providing medicinal fluid to the plurality of cultivating pot members 30.

The cultivation room 10 is constructed with four walls 11 and ceiling 12 by using vinyl, transparent plastic boards, acrylic resin, or glass etc. such as a typical glass greenhouse or vinyl greenhouse, and a door is generally installed on one wall among the four walls for cultivation and harvest management.

The circulatory system 20 includes a motor 21, a plurality of chain gears 22, and a left and a right chain 23, while the plurality of chain gears 22, and a left and a right chain 23 are equipped in the frame 13 to be able to take full advantage of the internal space in view of the height or the width of the cultivation room 10 as well as the kind of plants.

The plurality of left and right chain gears 22 are installed on each axis 24 located both in the left and right lower ends of the inner upward portion and the left and right upper, middle, and lower ends of the inner backward portion of the frame 13.

In the case that the axis 24, for installing the plurality of left and right chain gears 22 in the lower part of inner upward portion, and directly receiving the driving force from the motor 21, becomes a long axis traversed toward left and right in the inner space of the frame 13, while the axis 24, for installing the left and right chain gears 22 in the portion located both in the left and right upper ends of the inner upward portion and the left and right upper, middle, and lower ends of the inner backward portion of the frame 13, becomes a short axis not traversed toward left and right in the inner space of the frame 13, thereby simplifying the frame structure and reducing the installation cost.

The left and right chains 23 are chained by hanging onto the chain gears 22 located in the upward and lower portion of the frame and the chain gear located in the backward and middle portion, by hanging the chain gear located in the upward and upper portion, the chain gear located in the backward and upper portion, and the chain gear located in the backward and lower portion of the frame in turn, then passing through the chain gear located in the upward and lower portion.

According to the above installation, the practical ability of the inner space will be maximized by installing a lot of cultivating pot members 30 as compared to the inner space of the cultivation room 10, since the chain 23 is chained to be horizontally moved and circulated along a " 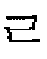 " type moving path.

On the other hand, the motor 21 is installed in the upward and inner lower portion of the frame 13, the left and right chains 23 can be circulated by transferring the driving force of the motor 21 onto an axle, for installing the left and right chain gears in the upward and inner lower portion, by an electric chain gear and an electric chain 23a which are axis-mounted onto a driving axis of the motor 21 and the left end where the left and right chain gears 22 are installed onto the upward and inner lower portion, respectively.

In addition, in each horizontal portion of left and right inner sides of the frame 13 passing through the left and right chains 23, the guide rails 14 are horizontally installed and then supports each chain roller 231 with the largest diameter of the chain.

In doing like this, since the chain 23 does not contact the guide rail 14, the circulation is smoothly performed and the noise and reduced life can be prevented due to not occurring contact resistance or abrasion by friction.

In addition, the load of the cultivating pot member is not put onto the chain 23 and then the cultivating pot member 30 and the chain 23 can be smoothly circulated with a more stable state, since the roller rail 14' extended toward backward in the inner lower portion of the guide rail 14 can support the roller 233 installed on left and right surfaces of the cultivating pot member 30.

In addition, the diameter of the left and right chain gear 22, which receive the driving force of the motor 21 in the inner forth and back portion, must be greater than other chain gears located in other positions.

Since the chain gear 22 having large diameter decreases the number of rotations and makes strong the rotation torque in comparison with the chain gear having a small diameter, the load for applying in the motor 21 is minimized in the initial course for rotating the left and right chains 23 from a stop state and in the process of rotating the left and right chains continuously.

Also, to install the cultivating pot member 30 in the inner portion which is facing with the left and right chains 23 each other, each vertical portion of the "¬" type bracket 25 is fixed at regular intervals and the hook axis 26 is horizontally fixed on their horizontal portion.

The cultivating pot member 30 includes a can body 31 having an opening in the upper surface, a left end and a right end; a suture plate 31' for bonding the left and the right ends of the can body 31 to be sutured respectively; a "∩" type hook plate 32 constructed on the middle portion of the upper surface of the suture plate 31'; and a medicinal fluid grouting 333 formed in the forth and back of the upper surface of the suture plate 31'.

The can body 31 is longitudinally formed with a large width which can move and plant the plant pots 30a in a nursery 30b as it is, without separating the plant pots 30a arranged by multiple columns and rows in the nursery 30b and germinate the seeds.

Meanwhile, an overflow tube 31a is installed in any bottom surface of a left or right surface of the cultivating pot member 30 to discharge the medicinal fluid excessively supplied, and thereby always maintaining the appropriate water level.

When the cultivating pot member 30 is installed in the circulatory system 20, it is desired that the upper end of the hook plate 32 can be hung onto each hook axis 26 which is horizontally fixed to the inner surface facing, with the left and right chains 23, each other.

Thus, the cultivating pot member 30 is rotatably axis-installed between the left and right chains 23 on the hook axis 26 as an axis such as hanging state at regular intervals, then the cultivating pot members can be circulated along a " 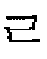 " type moving path in the inner space of the cultivation room 10 when the motor 21 is driven to rotate the chain.

As such, the cultivating pot member 30 can slowly circulate so as to not occur the swing back and forth by the inertia on the hook axis 26 as an axis, even if the chain 23 is stopped by stopping the motor 21.

FIG. 19a is a perspective view illustrating another example of a cultivating pot member applied in FIG. 14; and FIG. 19b is an enlarged perspective view illustrating a main part of a cultivating pot member of FIG. 14.

The cultivating pot member 30 is to assemble each plant pot 30a, which is separated and moved, with regular intervals one by one; and includes a forth and a back can bodies 31 having an opening in the upper surface, a left and a right end; a left and a right suture plate 31' for bonding and suturing by adhering the left and the right ends of the can bodies 31 on each inner surface of front and back ends of the can bodies 31; a "∩" type hook plate 32 constructed on the middle portion of the upper surface of the suture plate 31'; cover plates 33 for covering and combining the upper surface of the forth and the back can bodies 31 in the longitudinal direction, respectively; and a medicinal fluid grouting 333 formed in the forth and back portions of the upper surface of the suture plates 31'.

A combining plate 332 is downwardly extended in the front and rear ends of cover plates 33, and a coupling part 311, for combining the combining plate 332 on the upper end of the front and rear surfaces of the can bodies 31, is recessed and formed to the can bodies 31.

If the user assembles the plant pot 30a into the coupling holes 331 of the cover plate 33 respectively, the plant pot 30a can receive the nutriment contained in the medicinal fluid provided by receiving the lower portion of the plant pot 30a, excepting the upper portion of the plant pot 30a which is hung onto each coupling holes 331.

In addition, in any bottom surface of the left or the right surface of the can bodies 31, the overflow tube 31a is installed to discharge the medicinal fluid excessively supplied, and thereby always maintaining the appropriate water level.

The medicinal fluid supplier 40 includes: a cylinder 45 horizontally installed in the upper end of the right surface of the frame 13; a supply valve 46 attached to a load of the cylinder 45 and slidably installed toward forth and back; and a front and rear inlets 44 downwardly extended to the front and rear ends of the supply valve 46.

In addition, each one end of the distribution pipes 43 is connected with the front and rear inlets 44, where each other end is connected with the pump (not shown) for pumping the medicinal fluid stored in a general tank.

In addition, the front and rear inlets 44 are adhered to the load 451 of the cylinder at intervals which is proportional to the groutings 333, directly placed on the upper position and formed in the front and rear portions of each upper surface of the suture plates 31' sutured the opened left and right ends of the cultivating pot member 30, then the groutings 333 are directly passed through the lower portion of the front and rear inlets 44 as moving and circulating the cultivating pot members.

To supply the medicinal fluid into the medicinal fluid supplier 40, the front and rear inlets 44 are moved toward the rear direction which is an opposite direction of moving and circulating direction of the cultivating pot members and then stopped, by the load 451 forwardly driving the cylinder 45 in a state of moving and circulating the cultivating pot members 30.

Under these conditions, the groutings 333, formed in the cultivating pot member of the cultivating pot members which are moved and circulated, are directly arrived at the lower portion of the front and rear inlets 44, i.e., at home position for receiving the medicinal fluid, and sensed by a sensor (not shown), then the cylinder 45 is reversely driven to forwardly move the load 451 of the cylinder with the same speed as the cultivating pot members which are moved and circulated and open the supply valve 46 at the same time.

When it has completely done, the moving course of the grouting 333 and the front and rear inlets 44 at the same speed, the medicinal fluid is passed through the supply valve 46, the front and rear inlets 44 in turn, then is supplied into the inner space of the can bodies 31 through the grouting directly located in the lower portion of the inlets 44.

The supply operation of this medicinal fluid is performed within the distance that the load 451 is forwardly moved by reversely driving the cylinder 45.

After the forward moving is completely done, the supply operation of the medicinal fluid can be repeated to supply the medicinal fluid into the next cultivating pot member 30 by forwardly driving the cylinder 45 to backwardly move the load 451 of the cylinder.

As a result, the medicinal fluid supplier 40 can supply the medicinal fluid to the cultivating pot members in turn so as not stopping the moving circulation, and can stop the operation when the appropriate amount of the medicinal fluid is supplied to the all of the cultivating pot members.

On the other hand, an appropriate amount of the medicinal fluid shall be accepted into the cultivating pot members, since the amount of the medicinal fluid supplied into the cultivating pot member 30 will be increased by the operation of the medicinal fluid supplier 40, the medicinal fluid over flown into the cultivating pot member will be discharged through the overflow tube 31a.

In addition, the upper end of each outer surface of the waterspout 16 in which the upper portion is opened, is fixed and installed toward a longitudinal direction in the lower end of the each guide rail 14, and then the lower end of the overflow tube 31a is located in the opened upper end of the waterspout 16.

A drain hole 16a, formed in the rear end of the lower surface of each waterspout 16, is connected with the collecting tank through a collecting tube 17, so that the medicinal fluid drained through the overflow tube 31a is supplied into the collecting tank to reuse in the next time.

FIG. 22 is a perspective view illustrating another example of a cultivating pot member applied in FIG. 14.

In the cultivating pot member 30 of another example, a "∩" type upper portion 32a is formed in the middle portion of the upper surface of the suture plates 31', and a lower portion 32b downwardly extended from the upper end includes " 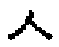 " type hook plate 32.

Accordingly, the cultivating pot member 30 can be always moved and circulated as maintaining the equilibrium state, since cases, that both the plant pots 30a are moved onto the can bodies 31, and any side of the weight of the plant pot is more heavily centered on the upper portion 32a of the hook plate 32 hanging onto the hook axis 26, occur, the " 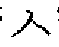 " type lower portion of the hook plate 32 maintains the center of the cultivating pot member to be not inclined toward forth or back direction.

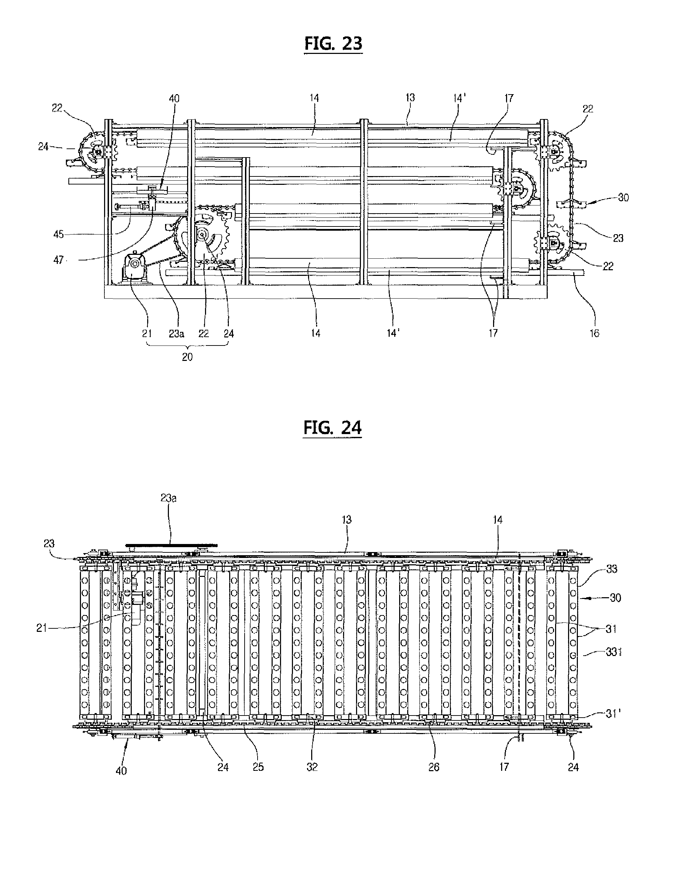

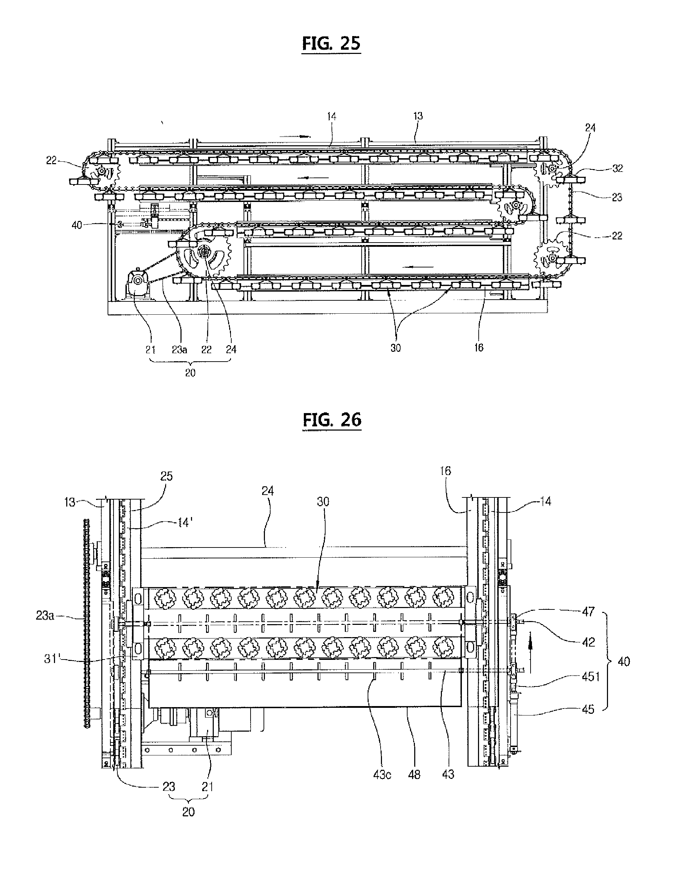

FIG. 23 is a side view schematically illustrating a plant cultivation system in accordance with the fourth embodiment of the present invention; FIG. 24 is a plane view illustrating a plant cultivation system of FIG. 23; FIG. 25 is a side view illustrating a main part of a plant cultivation system of FIG. 23; FIG. 26 is an enlarged plane view illustrating a main part of a plant cultivation system in FIG. 24.

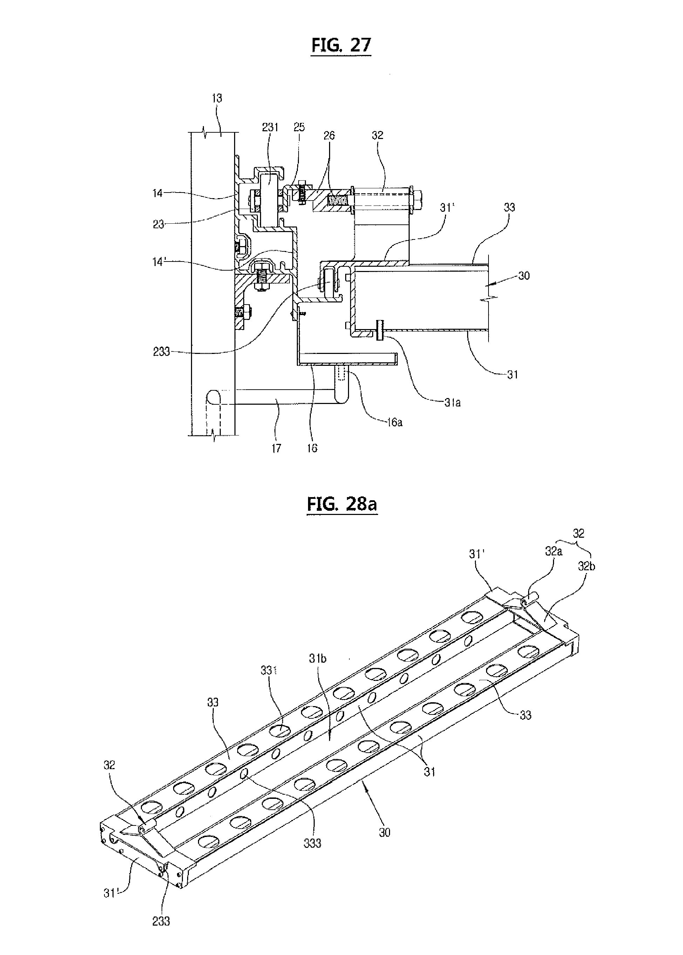

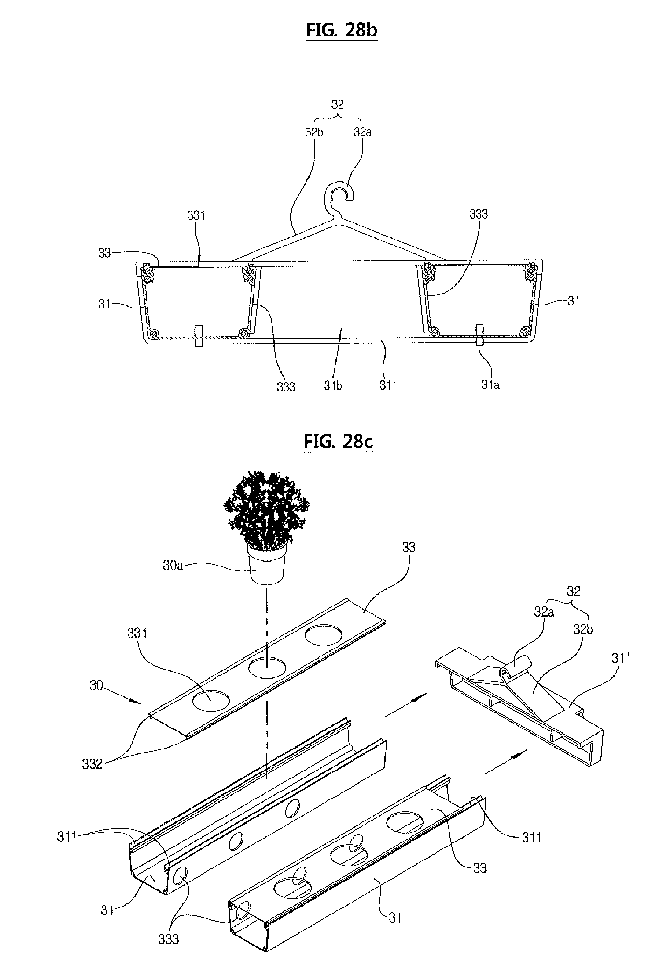

FIG. 27 is an enlarged rear view illustrating a main part of a plant cultivation system in FIG. 24; FIG. 28a is an enlarged perspective view illustrating a cultivating pot member in FIG. 24; FIG. 28b is an enlarged side view illustrating a cultivating pot member of FIG. 28a; FIG. 28c is an enlarged and exploded perspective view illustrating a main part of a cultivating pot member in FIG. 28a.

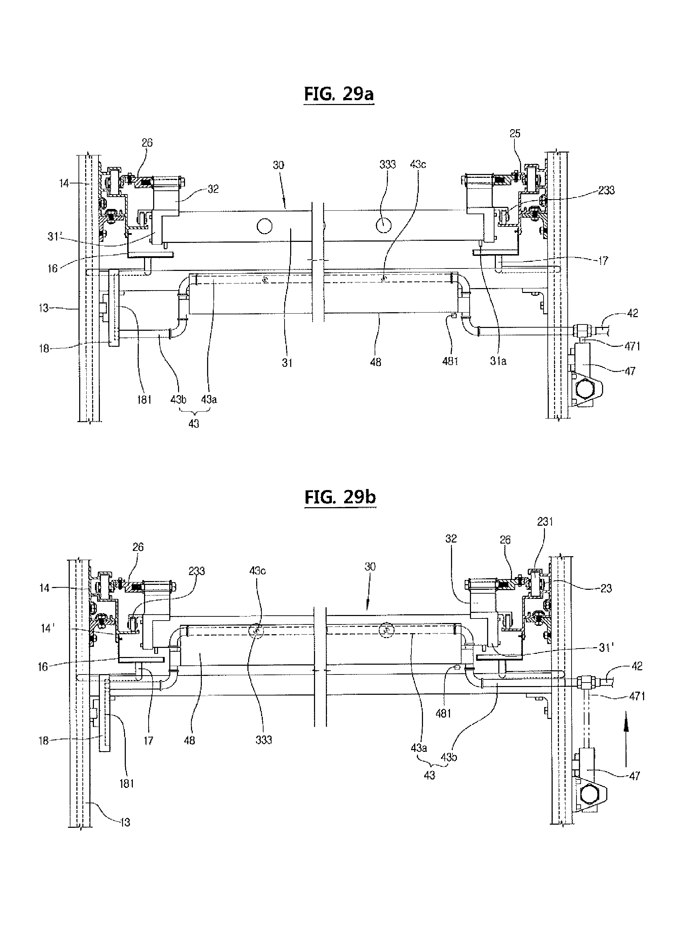

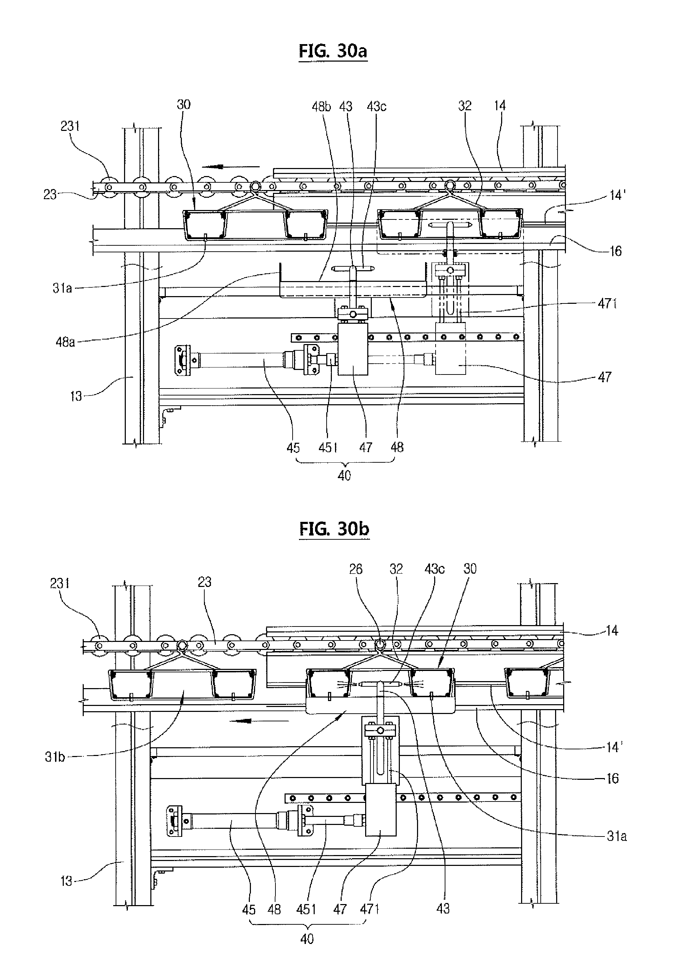

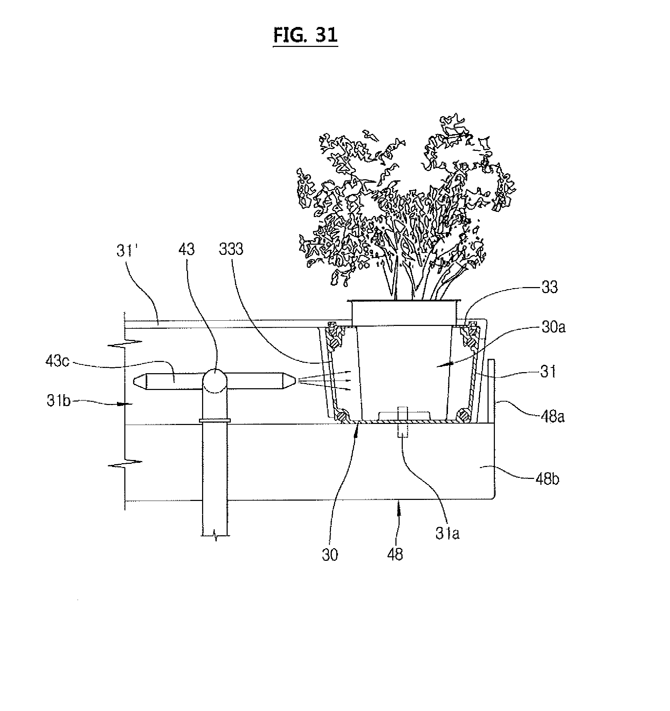

FIG. 29a is an enlarged plane view illustrating a main part of a medicinal fluid supplier in FIG. 24; FIG. 29b is a plane view illustrating a state that a cylinder is forwardly operated in FIG. 29a; FIG. 30a is an enlarged side view illustrating an installation place of a medicinal fluid supplier in FIG. 29a; FIG. 30b is a side view illustrating the operation state of a medicinal fluid supplier in FIG. 30a; and FIG. 31 is an enlarged cross sectional view illustrating a state that medicinal fluid is supplied to a cultivating pot member in F1G. 30a.

The plant cultivation system of a fourth embodiment of the present invention includes: a cultivation room 10 formed in four walls and ceiling by using vinyl, transparent plastic boards, acrylic resin, or glass etc. such as a typical glass greenhouse or vinyl greenhouse, and a door generally installed on one wall among the four walls for cultivation and harvest management; a motor 21; a plurality of left and right chain gears 22; and a plurality of left and right chains 23.

The circulatory system 20 is constituted the same as the third embodiment of the present invention and includes a motor, a plurality of chain gears, and a left and a right chain, which are equipped in a frame 13 to be able to take full advantage of the internal space in view of the height or the width of the cultivation room as well as the kind of plants. However, the cultivating pot member 30 and the medicinal fluid supplier 40 are differently constituted in comparison with the third embodiment of the present invention.

The cultivating pot member 30 includes a couple of forth and back can bodies 31, suture plates 31', and a forth and back cover plate 33.

The couple of forth and back can bodies 31 formed narrowly in width and lengthily in length and includes: an upper surface, a left and a right end which are opened; a couple portion 311 recessed and lengthily formed onto the upper end of forth and back surfaces of the can bodies; and a medicinal fluid grouting 333 formed in the middle portion of any surface of the forth and back surfaces at regular intervals.

These can bodies 31 are fixed and installed in the opened left and right ends by suturing and combining with the inner forth and back of the suture plates 31', so that the medicinal fluid is not spilled to the outside. In this stage, a pathway 31b for penetrating in above and below can be formed in a longitudinal direction between the can bodies which are separated in forth and back.

At this time, the medicinal fluid grouting 333, formed in the middle portion of any surface of the forth and back surfaces of the can bodies 31, is used to fix and install the left and right ends into the suture plates 31' to be faced each other.

Accordingly, the medicinal fluid pumped is supplied into the inner space of the forth and back can bodies 31 through nozzles 43c and the groutings 333 at the same time, by squaring the nozzles 43c, formed in front and rear surfaces of a horizontal portion 43a of the distribution pipe 43, with the groutings 333 of the forth and back can bodies 31 when the horizontal portion 43a is risen from the lower portion through the pathway 31b when the medicinal fluid supplier 40 is operated.

In addition, in the middle portion of the upper surface of the suture plates 31', the hook plate 32 is installed while an upper portion 32a is formed in a "∩" shape and a lower portion 32b, downwardly extended from one end to the other end of the upper portion, is formed in a " 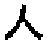 " shape.

If the user hangs the hook plate 32 onto hook axis 26 fixed in the inner surfaces of the left and right chains 23 facing each other at regular intervals, then the cultivating pot members can be hangingly installed to be horizontally traversed between the left and right chains.

In addition, in the exterior of the suture plates 31', the roller 233 supported in a roller rail 14' downwardly and integrally extended to the inner lower end of the guide rail 14. Thus, the weight of the cultivating pot member 30 is not loaded on the left and right chains 23 and then the cultivating pot members and the chain are smoothly moved and circulated in a stable state.

The cover plate 33 is to cover and combine the upper surface of the forth and the back can bodies 31 in longitudinal direction, respectively, and a combining plate 332 combined in the coupling part 311 is downwardly extended in the forth and back ends of the cover plates, and a coupling hole 331 of the plant pot 30a is formed in the upper surface at regular intervals.

Accordingly, the cultivating pot member 30 can always be moved and circulated as maintaining the equilibrium state, since cases, that both the plant pots 30a are coupled onto the coupling holes 331 of each cover plate 33 respectively, and any side of the weight of the plant pot is more heavily centered on the upper portion 32a of the hook plate 32 hanging onto the hook axis 26, occur, the " 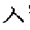 " type lower portion of the hook plate 32 maintains the center of the cultivating pot member to be not inclined toward forth or back direction.

Meanwhile, the medicinal fluid supplier 40 of the forth embodiment of the present invention is installed in the middle portion of the front surface of the frame 13 and includes: distribution pipes 43, a cylinder 45, a vertical cylinder 47 and a collecting tank 48.

The distribution pipes 43 include a horizontal portion 43a, left and right ends 43b double strained from both ends of the horizontal portion to the lower vertically and extended to horizontal direction, and nozzles 43c horizontally formed in the front and rear surfaces of the horizontal portion at regular intervals.

The left end of the left and right ends 43b of the distribution pipes 43 is combined into a guide groove 181 vertically formed in the inner side of the guide plate 18 located in the left side of the frame in order to vertically ascend or descend, while the right end is fixed and installed on the upper end of the load 471 of the vertical cylinder 47.

Accordingly, since the vertical cylinder 47 is forwardly driven, and the load 471 can vertically ascend, then the distribution pipes 43 horizontally ascend. But when the vertical cylinder 47 is reversely driven, the load 471 can vertically descend.

Additionally, the right end of the distribution pipes 43 is connected with the supply pipe 42, which is also connected with the pump (not shown) for pumping the medicinal fluid stored in the medicinal fluid tank (not shown), so as to receive the medicinal fluid, while the left end is sealed to not spill the medicinal fluid.

The collecting tank 48 is formed in a rectangular shape, of which the upper surface is opened, and the left and right surfaces 48b are lower than the front and rear surfaces 48a in height. The length between the left and right surfaces is smaller than the interval between the left and the right of the cultivating pot member 30, while the length between the front and the rear surfaces is larger than the interval between the front and the rear of the cultivating pot member.

Accordingly, if the collecting tank 48 is ascended and next stopped, the left and right ends of the lower portion of the cultivating pot member are exposed to the outside of the left and the right surfaces of the collecting tank 48 and while the front and rear ends of the lower portion of the cultivating pot member are accepted between the front and rear surfaces of the collecting tank 48. Here, the collecting tank 48 is ascended so that the upper end of the left and the right ends 48b, which is more lower than the front and the rear surfaces 48a in height, can support the left and the right portions of the lower surface of the cultivating pot member in the lower portion of one cultivating pot member 30.

In doing like the above disclosure, there exists the medicinal fluid partially overflown in the medicinal fluid supply course, the medicinal fluid can be collected into the collecting tank 48 without spilling to the outside, since both the medicinal fluid groutings 333 formed in the front and rear can bodies 31 of the cultivating pot member 30 and the nozzles 43c installed in the distribution pipes 43 to be corresponded to each other, are located in the inner space of the collecting tank 48.

In addition, the outer surface of the left and right surface of the collecting tank 48 is vertically fixed in the lower portion of the left and right ends 43b of the distribution pipes 43 to traverse toward left and right the inner upper portion through the upper ends of the left and right surface 48b where the horizontal portion 43a of the distribution pipes 43 is lower in height. Then, both the collecting tank 48 and the distribution pipes 43 can be moved in forth and back and vertically ascend or descend.

In addition, a drain hole 481 for connecting with the collecting tank through the collecting tube is installed in an end of the lower portion of the collecting tank 48, so that the medicinal fluid which is collected can be sent to the collecting tank 48.

When the medicinal fluid is supplied to the cultivating pot member 30 described as above, the cylinder 45, horizontally installed in the upper portion of the right side of the frame 13, is forwardly driven in the state that the cultivating pot members 30 having the front and rear can bodies 31 is moved and circulated, so that the vertical cylinder 47 vertically fixed and installed on the load 451 by forwardly driving the cylinder 45 installed in the upper portion of the right side of the frame 13 is moved to the reverse direction of the moving and circulating direction of the cultivating pot members 30 and stopped next, and then both the distribution pipes 43 and the collecting tank 48 can be moved in back.

Under these conditions, the pathway 31b between the front and rear can bodies 31 of the cultivating pot member for receiving the medicinal fluid among the cultivating pot members which are moved and circulated, directly arrive at the upper portion of the distribution pipes 43, i.e., at home position for receiving the medicinal fluid, and sensed by a sensor (not shown), then (1) the cylinder 45 is reversely driven to forwardly move the load 451 of the cylinder with the same speed as the cultivating pot members which are moved and circulated, and (2) the forward driving of the vertical cylinder is stopped and the medicinal fluid supplier 40 is operated at the same time in the case that the horizontal portion 43a of the distribution pipes 43 is ascended to the pathway 31 b by the load 471 due to forwardly drive the vertical cylinder 47, and both the nozzles 43c installed in the front and rear surfaces and medicinal fluid grouting 333 are faced each other.

When it has completely done, in the moving course of the grouting 333 and the front and rear inlets 44 at the same speed, the medicinal fluid is passed through the supply valve 46, the front and rear inlets 44 by turn, then is supplied into the inner space of the can bodies 31 through the grouting directly located in the lower portion of the inlets 44.

The supply operation of these medicinal fluids is performed within the distance that the vertical cylinder 47 stops the forward driving and then the load 451 is forwardly moved by reverse driving the cylinder 45.

After, as soon as, the forward moving is completely done, the supply operation of the medicinal fluid can be repeated to supply the medicinal fluid into the next cultivating pot member 30 by stopping the reverse driving of the vertical cylinder 47 and by forwardly driving the cylinder 45 to backwardly move the load 451 of the cylinder in case that the distribution pipes 43 descend completely by the load 471 since the reverse driving of the cylinder 45 is stopped and the vertical cylinder 47 is reversely driven at the same time.

As a result, the medicinal fluid supplier 40 can supply the medicinal fluid to the cultivating pot members in turn by not stopping the moving circulation, and can stop the operation when the appropriate amount of the medicinal fluid is supplied to the all of the cultivating pot members.

On the other hand, an appropriate amount of the medicinal fluid shall be accepted into the cultivating pot members, since the amount of the medicinal fluid supplied into the cultivating pot member 30 will be increased by the operation of the medicinal fluid supplier 40, the medicinal fluid over flown into the cultivating pot member will be discharged through the overflow tube 31a.

In addition, the upper end of each outer surface of the waterspout 16 in which the upper portion is opened, is fixed and installed toward the longitudinal direction in the lower end of the each guide rail 14, and then the lower end of the overflow tube 31a is located on the opened upper end of the waterspout 16.

The drain holes 16a, formed in the rear end of the lower surface of each waterspout 16, are connected with the collecting tank through the collecting tube 17, so that (1) the medicinal fluid drained through the overflow tube 31a is supplied into the collecting tank, (2) and if there exists the medicinal fluid spouting through the nozzles 43c connected with the collecting tank and rolling down into the collecting tank among the medicinal fluid supplied to the medicinal fluid grouting 333, since the drain hole 481 formed in the lower surface of the collecting tank 48 is connected with the collecting tank through a separated tube 17' to reuse in the next time.

The plant cultivation system of the third and fourth embodiments of the present invention further include an air blast fan 51 to supply purified external air or circulate internal air, and then it is smoothly performed to adjust the interval temperature, supply the fresh air, and adequately ventilate with clean wind, thereby constructing a pleasant environment. Also, the plants can be grown and cultivated in the pleasant environment such that the growth and development is expedited as well as the rotting of the plants and fruits are prevented simultaneously.

In addition, a plurality of lamps are installed in the corresponding area which is not in a sunny location of the frame 13 and can be always lighted, if necessary. Accordingly, the plants can be cultivated and harvested in a short period in all weather without not only a significant impact on the natural environment but also regardless of place for cultivation, since the plants potted in plant pots 30a can evenly receive the sun light energy regardless of the location where the cultivating pot member is moved.

In the third and fourth embodiments of the present invention, the sensor which senses the home position of the cultivating pot member, is used a light sensor or a limit switch and the expression is omitted in these embodiments.

In the first through fourth embodiments of the present invention, the circulatory system 20, the cultivating pot members 30, the medicinal fluid supplier 40, and the air blower 50 can be automatically operated by a general automatic control system and these can be manually operated, if necessary.

In addition, in the first, second and fourth embodiments of the present invention, the cultivating pot member 30 is horizontally moved and circulated along a " 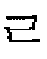 " path in the inner space of the cultivation room 10, while the cultivating pot member 30 is slantly ascended or descended repeatedly to move and circulate in the inner space of the cultivation room. But, this is an example that each must be described but not limited to.

The above embodiments of the claimed invention serve as illustrations only, and a person skilled in the art should realize that other embodiments of the invention are possible and that the details of the invention can be modified according to various conditions of the area of the inner space in the cultivation room or the installation location as well without going beyond the concept and scope of the invention as claimed herein.

### List of Reference Numerals:

- 10: Cultivation room
- 10a: Reflector
- 10b: Secondary reflector
- 10c: Wheel
- 11: Walls
- 12: Ceiling
- 13: Frame
- 13a: Supporting frame
- 14: Guide rails
- 14': Roller rail
- 15: Holding rail
- 16: Waterspout
- 16a: Drain Holes
- 17: Collecting tube
- 17': Separated tube
- 18: Guide plate
- 20: Circulatory system
- 21: Deduction/Motor
- 22: Chain gears
- 23: Chain
- 23a: Electric chain
- 24: Axes
- 25: "¬" shaped bracket
- 26: Hook axis
- 27: Tension member
- 30: Cultivating pot members
- 30a: Plant pot
- 30b: Nursery
- 31: Can body
- 31': Suture plate
- 31a: Overflow pipe
- 31b: Pathway
- 32: Hook plate
- 32a: "∩" type upper portion
- 32b: Lower portion
- 33: Cover plate
- 34: Hold plate
- 35: Gauge
- 36: Separation plate
- 37: Sandy loam
- 38: Culture soil
- 40: Medicinal fluid supplier
- 41: Pump
- 42: Supply pipe
- 43: Distribution pipe
- 43a: Horizontal portion
- 43b: Left and right ends
- 43c: Nozzles
- 44: Inlet
- 45: Cylinder
- 46: Supply Valve
- 47: Vertical cylinder
- 48: Collecting tank
- 48a: Front and rear surfaces
- 48b: Left and right surfaces
- 50: Air blower
- 51: Air blast fan
- 52: Blast pipe
- 53: Branched blast pipe
- 54: Exhaust
- 60: Lamps
- 131: Left and right front vertical beam
- 132: Left and right horizontal beam
- 133: Left and right rear vertical beam
- 134: Left and right vertical beam
- 135: Left and right horizontal support beam
- 136: Left and right incline support beam
- 137: Left and right vertical support beam
- 137': Horizontal support beam
- 138: Left and right vertical beam
- 139: Short vertical beam
- 141: Rail groove
- 151: Holding plate
- 181: Guide groove
- 231: Chain roller
- 232: Inside and outside plates
- 233: Roller
- 311: Combining part
- 312: Binding part
- 314: Drain aperture
- 321: Fixing plate
- 331: Coupling hole
- 332: Combining plate
- 333: Grouting
- 341: Binding plate
- 421: Other end of supply pipe 42
- 451: Load
- 471: Load
- 481: Draining hole

## Claims

1. A plant cultivation system comprising:
- a circulatory system (20) including a plurality of axes (24) installed in a corresponding portion of a frame (13) installed in a cultivation room (10); a plurality of chain gears (22) axis-installed on the plurality of axes (24) respectively; a left and a right chain (23) for chaining the plurality of chain gears (22) to be hung in turn; and a motor (21) connected and installed onto any axis of the plurality of axes (24);
- a plurality of cultivating pot members (30) including a can body (31) having an opening in an upper surface, and a hook plate (32), fixed to left and right ends of the upper surface of the can body, for axis coupling and installing by hanging onto left and right hook axes (26) horizontally fixed in an inner space of the left and the right chains (23) which face each other at regular intervals; and for moving and circulating in the inner space of the cultivation room (10) by rotatably installing as hanging between the left and the right chains (23) by the left and right hook axes (26) and the hook plate (32);
- a medicinal fluid supplier (40) for providing the medicinal fluid to the plurality of cultivating pot members (30); and
- an air blower (50), installed in the cultivation room (10), for providing the filtered external air to an interior or for circulating the inner air.

2. The system according to claim 1,
further comprising a plurality of lamps (60) installed on the frame (13) at regular intervals to be traversed toward left and right for the moving direction of the cultivating pot member (30).

3. The system according to claim 1 or 2,
further comprising a reflector (10a), installed inside of the cultivation room (10), for reflecting sunlight shining around the circulatory system (20) to the cultivating pot members (30).

4. The system according to any of claims 1 to 3,
wherein the cultivation room (10) is made of a transparent member such as vinyl, transparent plastic boards, acrylic resin, or glass etc.; and the medicinal fluid supplier (40) includes a pump (41) for pumping the medicinal fluid; a supply pipe (42) having an end connected with the pump (41) and the other end (421) for draining from a middle portion of an end of the frame (13) to a lower inner portion; a distribution pipe (43) horizontally installed to be traversed toward back and forth in the middle portion of the direct upper part of the plurality of cultivating pot members (30) connected to the middle part with the other end (421) and passed through in the lowest portion of the frame (13); and an inlet (44) installed on the lower portion of the distribution pipe (43) at regular intervals.

5. The system according to any of claims 1 to 4,
wherein the air blower (50) comprises an air blast fan (51); a blast pipe (52) formed to be traversed toward back and forth on the lower end of the frame (13) by connecting a rear end with the air blast fan (51); a plurality of branched blast pipes (53) formed to be traversed toward left and right on the lower surface of each frame (13) by connecting a rear end to the air blast fan (51) at regular intervals; and an exhaust (54) formed at regular intervals in each upper surface of the branched blast pipes (53).

6. The system according to any of claims 1 to 5,
wherein the frame (13) comprises: a left and right front vertical beam (131); a left and right horizontal beam (132) in which each rear part is fixed to the front vertical beam (131) to be forwardly extended to an outside; a left and right rear vertical beam (133); a left and right vertical beam (134) directly located in a rear place of the front vertical beam (131); a plurality of left and right horizontal support beams (135) for horizontally connecting and fixing to both an upper and a lower portions and an intermediate portion of the front vertical beam (131), the rear vertical beam (133) and the left and right vertical beam (134), and a plurality of left and right incline support beams (136) for slopingly connecting and fixing to the left and right horizontal beam (132);
the plurality of chain gears (22) are axis-fixed at the both ends of each axis (24) installed to be traversed at left and right in corresponding portions that of each upper end and lower end of the front vertical beam (131), each front end of the left and right horizontal beam (132), and each upper end, middle end, and lower end of the left and right vertical beam (134); and
the left and right chains (23) are installed to be horizontally chained and moved through a chain gear (22) located in each lower end of the left and right of front vertical beam (131), a chain gear (22) located in the upper end of the front vertical beam (131) through a chain gear (22) located in the front end of the left and right horizontal beam (132), a chain gear (22) located in the upper end of the rear vertical beam (133), a chain gear (22) located in the upper end of the left and right vertical beam (134), a chain gear (22) located in the middle end of the rear vertical beam (133), a chain gear (22) located in the middle of the left and right vertical beam (134), and a chain gear (22) located in the lower end of the rear vertical beam (133), respectively.

7. The system according to any of claims 1 to 5,
wherein the frame (13) includes: a plurality of left and right vertical beams (138) lengthily formed in length; a plurality of short vertical beams (139) shortly formed in length and alternately arranged one by one at regular intervals between the plurality of left and right vertical beams (138); and a plurality of left and right horizontal beams (132) for fixing the upper end and the lower end of the plurality of left and right vertical beams (138) and the plurality of short vertical beams (139), respectively;
the plurality of left and right chain gears (22) are axis-fixed onto each left and right ends of the plurality of axes (24) installed to be traversed toward left and right for the upper end of the left and right vertical beams (138) and the upper and lower ends of the left and right horizontal beams (132) located in the upper end and lower end of the short vertical beams (139); and
the left and right chains (23) where the plurality of cultivating pot members 30 are repeatedly ascended and descended in a diagonal like line between a left and right gear (22) located in the upper portion of the left and right vertical beams (138) and a left and right gear (22) located in the upper portion of the short vertical beams (139) by hanging the chain gear (22) for axis-fixing in the left and right ends of the axis (24) in turn.

8. The system according to claim 6 or 7,
wherein guide rails (14) are horizontally fixed and installed to support the chain (23) in each corresponding place where the chain (23) passes through the inner sides of the front vertical beam (131), the left and right of rear vertical beam (133), and the left and right vertical beam (134).

9. The system according to any of claims 6 to 8,
wherein the diameter of each chain roller (231) of the chain is larger than the upper and the bottom width of inside and outside plates (232), then the chain roller (231) is grounded in the bottom of the guide rails (14), and the inside and outside plates (232) are not contacted to the ground; and
a rail groove (141), accepted of the outer surface of the chain rollers (231), is formed in the upper and lower surface of the guide rail (14).

10. The system according to any of claims 6 to 9,
wherein the rail groove (141) for supporting the left and right chain (23) is installed in the inner side of the front vertical beam (131), the left and right of rear vertical beam (133), and the left and right vertical beam (134), while a roller rail (14') is integrally formed to be downwardly extended in the inner end of the lower surface of the guide rail (14); and
a roller (233), rotatable and moveable in the state as the roller rail (14') is supported, is axis-installed in the left and right surface of the cultivating pot member (30).

11. The system according to any of claims 6 to 10,
wherein left and right vertical support beams (137) are installed in left and right ends of the front vertical beam (131), the left and right of rear vertical beam (133), and the left and right vertical beam (134); a front and rear of horizontal support beam (137') is fixed and installed to be traversed in left and right in each corresponding portion of inner sides of the left and right vertical support beams (137) which is corresponding to the place of passing through the lower surface of the cultivating pot member (30); and a holding rail (15) is horizontally installed to be traversed in back and forth in the upper left and right of horizontal support beam (137').

12. The system according to any of claims 1 to 11,
wherein the cultivating pot member (30) comprises: a can body (31) having an opening in the upper surface and a drain aperture (314) formed on the lower end; a binding part (312) formed in the length direction on front and rear surfaces of the upper end of the can body (31); and a holding plate (34) having an end, where a binding plate (341) is horizontally formed, to attach or detach onto the binding part, and the other end, which is downwardly and obliquely extended with a shallow angle from the end, is forwardly curved and formed.

13. The system according to any of claims 1 to 12,
wherein the cultivating pot member (30) comprises: a hook plate (32) having a "∩" type upper end for axis coupling by hanging onto the hook axis (26) and a lower end for installing a fixing plate (321) onto both ends of the upper surface of the can respectively, and a cover plate (33) combined to the opening to cover the upper surface, and formed with a coupling hole (331) for a plant pot (30a).

14. The system according to any of claims 1 to 13,
wherein the cultivating pot member (30) further comprises a gauge (35) coupled and installed on an installation hole formed in a one side of the fixing plates (321).

15. The system according to any of claims 1 to 14,
wherein the cultivating pot member (30) comprises a can body (31) having an opening in the upper surface and vertically and lengthily formed; a hook plate (32) having a "∩" type upper end and a lower end for installing a fixing plate (321) onto both ends of the upper surface of the can body (31), respectively; a separation plate (36) formed with groutings (333) and fixed to be traversed toward left and right in the middle of the opened upper surface; left and right cover plates (33) covered and combined in the opened upper surface separated in left and right by the separation plate (36), respectively; and a gauge (35) coupled and installed on an installation hole formed in a one side of the fixing plates (321).

16. The system according to any of claims 1 to 15,
wherein the cultivating pot member (30) comprises a can body (31) formed lengthily in length and having an upper surface which is opened; a hook plate (32) having a "∩" type upper end and a lower end for installing a fixing plate (321) onto both ends of the upper surface of the can body (31), respectively; a separation plate (36) formed with groutings (333) and fixed to be traversed toward left and right in the middle of the opened upper surface; left and right cover plates (33) covered and combined in the opened upper surface separated in left and right by the separation plate (36), respectively; and a gauge (35) coupled and installed on an installation hole formed in a one side of the fixing plates (321); and
the medicinal fluid supplier (40) comprises: a cylinder (45) horizontally installed in the upper end of the right surface of the frame (13); a supply valve (46) attached a load of the cylinder (45) and slidably installed toward forth and back; and front and rear inlets (44) for injecting the medicinal fluid into the grouting (333) directly from an upper side in the moving course of the grouting (333) at the same speed as the speed of the cultivating pot member (30), by installing a forth and a back of the supply valve (46) in proportion to the intervals of the grouting (333) formed in a forth and a back of the upper surface of the suture plates (31').

17. The system according to any of claims 1 to 16,
wherein the cultivating pot member (30) comprises: a forth and a back can body (31) having an opening in the upper surface, a left and a right end; a left and a right suture plate (31') for bonding and suturing by adhering the left and the right ends of the can bodies (31); a "∩" type hook plate (32) constructed on the middle portion of the upper surface of the suture plate (31'); a cover plate (33) for covering and combining the upper surface of the forth and the back can bodies (31) and formed with a coupling hole (331) of the plant pot in the upper surface at regular intervals; and a medicinal fluid grouting (333) formed in the forth and back portions of the upper surface of the suture plates (31').

18. The system according to any of claims 1 to 17,
wherein the cultivating pot member (30) comprises: a can body (31) having an opening in the upper surface, a left and a right end; a left and a right suture plate (31') for bonding and suturing by adhering the left and the right ends of the can body (31); a hook plate (32) having a "∩" type upper end (32a) and a " 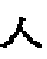 " type lower end (32b), downwardly extended from one end of the upper end (32a), for installing in the middle portion of the upper surface of the left and the right suture plates (31'); and a medicinal fluid grouting (333) formed in the forth and back portions of the upper surface of the suture plates (31').

19. The system according to any of claims 1 to 18,
wherein a forth and a back can body (31) formed lengthily in length and having an opening in the upper surface, a left and a right end; a left and a right suture plate (31') for bonding and suturing by adhering the opened left and right ends onto the forth and back side of each inner surface of the can bodies (31) to form a pathway (31b) for penetrating in above and below between the can bodies; a medicinal fluid grouting (333) formed in the forth and back portions of the upper surface of the suture plates (31'); a hook plate (32) having a "∩" type upper end (32a) and a " 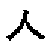 " type lower end (32b), downwardly extended from one end of the upper end (32a), for installing in the middle portion of the upper surface of the left and the right suture plates (31'); and a cover plate (33) for covering and combining the upper surface of the forth and the back can bodies (31) and formed with a coupling hole (331) of the plant pot in the upper surface at regular intervals; and
the medicinal fluid supply (40) comprises: a cylinder (45) horizontally installed in the upper end of the right surface of the frame (13); a vertical cylinder (47) vertically fixed and installed on the load (451) of the cylinder (45); a distribution pipe (43) having a left end, of the left and right ends (43b) of the distribution pipes (43), combined into a guide groove (181) vertically formed in the inner side of the guide plate (18) located in the left side of the frame in order to vertically ascend or descend, and a right end fixed and installed on the upper end of the load (471) of the vertical cylinder (47); a collecting tank (48) vertically fixed in the lower portion of the left and right ends (43b) of the distribution pipes (43) to traverse toward left and right of the inner upper portion; a supply valve (46) attached to a load (451) of the cylinder (45) and slidably installed toward forth and back; and nozzles (43c) for injecting the medicinal fluid into medicinal fluid groutings (333) in the course of moving with the same speed as the cultivating pot member (30) by ascending to the pathway (31b), and installing the medicinal fluid groutings (333) onto the facing surfaces of the can bodies (31) with a forth and a back surface of the distribution pipes (43) traversed toward left and right onto the inner upper side of the collecting tank (48).

20. The system according to any of claims 1 to 19,
wherein a collecting tank (48) is formed so that left and right surfaces are lower than the front and rear surfaces in height; the length between the left and right surfaces is smaller than the interval between the left and the right of the cultivating pot member (30), and the length between the front and rear surfaces is larger than the interval between the front and rear of the cultivating pot member (30); and includes a drain hole (481) of the medicinal fluid installed in the lower portion.

21. The system according to any of claims 1 to 20,
wherein guide rails (14) supporting the left and right chains (23) are installed in the inner space of the frame (13); a roller rail (14') is downwardly and integrally extended to the inner end of the lower surface of the guide rail (14); and a waterspout (16), in which the upper portion is opened, is fixed and installed toward a longitudinal direction in the lower end of the each guide rail (14); and
the cultivating pot member (30) comprises a roller (233) installed onto the left and right surfaces to be supported by the roller rail (14'); and an overflow tube (31a) installed in any bottom surface of a left or right surface of the cultivating pot member (30) and located in the upper portion of the waterspout (16) for each lower end.

22. The system according to any of claims 1 to 21,
wherein an axis (24), for directly receiving the driving force of the motor (21) among axes (24) for installing the plurality of left and right chain gears in each frame (13), becomes a long axis traversed toward left and right in the inner space of the frame (13), while axes (24) located in other places become a short axis not traversed toward left and right in the inner space of the frame (13).

23. The system according to any of claims 1 to 22,
wherein a diameter of the chain gear (22), installed on the axis (24) directly receiving the driving force of the motor (21) among the plurality of left and right chain gears (22), is large in comparison with chain gears located in other places.
